(19) Europäisches Patentamt
European Patent Office
Office européen des brevets

(11) **EP 2 628 282 B1**

(12) **FASCICULE DE BREVET EUROPEEN**

(45) Date de publication et mention de la délivrance du brevet:
**11.05.2016 Bulletin 2016/19**

(21) Numéro de dépôt: **11785723.5**

(22) Date de dépôt: **17.10.2011**

(51) Int Cl.:
*H04L 25/02* *(2006.01)*　*H04L 27/26* *(2006.01)*
*H04L 5/00* *(2006.01)*　*H04B 7/06* *(2006.01)*
*H04B 7/04* *(2006.01)*　*H04L 1/00* *(2006.01)*

(86) Numéro de dépôt international:
**PCT/FR2011/052419**

(87) Numéro de publication internationale:
**WO 2012/049436 (19.04.2012 Gazette 2012/16)**

(54) **PROCEDES D'EMISSION ET DE RECEPTION D'UN SIGNAL MULTIPORTEUSE, EMETTEUR, RECEPTEUR, SIGNAL DE RETOUR ET PROGRAMMES D'ORDINATEUR CORRESPONDANTS**

VERFAHREN ZUM SENDEN UND EMPFANGEN EINES MEHRTRÄGERSIGNALS, SENDER, EMPFÄNGER, RÜCKSIGNAL UND ENTSPRECHENDE COMPUTERPROGRAMME

METHODS FOR SENDING AND RECEIVING A MULTICARRIER SIGNAL, SENDER, RECEIVER, RETURN SIGNAL AND COMPUTER PROGRAMS CORRESPONDING THERETO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2010 FR 1058434**

(43) Date de publication de la demande:
**21.08.2013 Bulletin 2013/34**

(73) Titulaire: **Orange**
**75015 Paris (FR)**

(72) Inventeurs:
• **CARIOU, Laurent**
  **F-35700 Rennes (FR)**
• **DIALLO, Moussa**
  **GRAND MBAO - DAKAR (SN)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2006/060241**　　**WO-A2-2010/056763**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. Domaine de l'invention

Le domaine de l'invention est celui des communications numériques, et plus précisément des communications nécessitant une connaissance du canal de transmission à l'émission.

Plus précisément, l'invention concerne l'émission et la réception d'un signal à porteuses multiples permettant d'obtenir, au niveau de l'émetteur, une estimation du canal de transmission grâce à une information remontée dans un signal de retour issu du récepteur, encore appelé « feedback ».

L'invention trouve notamment des applications dans les systèmes de transmission de type MIMO (en anglais « Multiple Input - Multiple Output » pour « entrées multiples - sorties multiples ») mono-utilisateur, mettant par exemple en oeuvre des faisceaux (en anglais « beamforming » pour « formation de faisceaux), ou multi-utilisateurs, mettant par exemple en oeuvre une technique de type SDMA (en anglais « spatial division multiple access » pour « accès multiple à répartition spatiale »), ou dans des algorithmes d'allocation de l'information (encore appelés « bit loading » en anglais).

En particulier, l'invention trouve des applications dans les systèmes de transmission selon la norme IEEE 802.11n et ses versions à venir, notamment les versions 802.11ac et 802.11ad, ainsi que dans les systèmes de transmission cellulaires de future génération (en anglais « LTE Advanced » pour « Long Term Evolution Advanced ») qui utilisent la technique SDMA.

### 2. Art antérieur

Les techniques de transmission nécessitant une connaissance du canal de transmission à l'émission présentent de nombreux avantages.

Par exemple, la technique dite de « beamforming » permet de focaliser la puissance d'émission vers un récepteur particulier, et ainsi d'augmenter le rapport signal à bruit en réception. De ce fait, il est possible de transmettre des données avec une modulation plus élevée. Le débit de transmission obtenu avec cette technique de « beamforming » nécessitant une connaissance du canal à l'émission (ie avec « feedback ») est donc plus important que le débit de transmission obtenu dans un système de transmission sans connaissance du canal à l'émission (ie sans « feedback »), comme le multiplexage spatial MIMO.

Afin d'obtenir une connaissance du canal de transmission à l'émission, il est classique, lors d'une phase de sondage préalable à la phase de transmission des données, d'estimer le canal de transmission au niveau du récepteur, en utilisant des pilotes émis par l'émetteur, puis de coder cette information pour la transmettre à l'émetteur sur une voie de retour, afin de la décoder au niveau de l'émetteur. Ce mode d'estimation du canal et d'information de l'émetteur est parfois appelé « explicit feedback », pour « retour explicite ».

Malheureusement, la quantité d'information à retransmettre sur la voie de retour suivant ce mode peut facilement devenir très importante, du fait d'un nombre élevé de porteuses, du nombre de sous-canaux MIMO entre les différentes entrées et les différentes sorties, du nombre d'utilisateurs, etc. Le temps nécessaire pour transmettre ces informations de retour à l'émetteur, et donc la durée de la phase de sondage, sont donc de plus en plus importants, ce qui affecte l'efficacité globale de la transmission.

Il est donc souhaitable de compresser ces informations de retour afin de réduire la durée de retransmission de ce « feedback ».

A cet effet, plusieurs techniques ont été proposées, notamment dans la version 802.1 In de la norme Wifi. Il est toutefois souhaitable de diminuer encore plus cette quantité d'informations.

En effet, plus la quantité d'informations est importante, plus la durée de la phase de sondage est importante, ce qui diminue le temps pendant lequel une transmission haut débit peut avoir lieu. L'efficacité du système de transmission se trouve donc dégradée, puisque aucune information utile n'est transmise durant cette phase de sondage.

En particulier, si la durée de la phase de sondage est trop importante, la perte de débit engendrée peut compenser complètement les gains de débits de transmission obtenus par l'utilisation d'une technique nécessitant la connaissance du canal à l'émission (ie avec « feedback »).

De plus, avec les techniques de transmission actuelles et à venir, le nombre d'antennes d'émission et/ou de réception s'accroît, ainsi que le nombre de porteuses, et éventuellement le nombre d'utilisateurs (cas du SDMA notamment).

La quantité d'informations à retourner à l'émetteur est donc de plus en plus importante, et affaiblit l'efficacité des nouveaux systèmes de transmission. Ces nouveaux systèmes, qui transmettent à des débits très élevés, sont d'autant plus sensibles aux pertes de temps dues à la remontée d'informations.

Les inventeurs de la présente demande de brevet ont d'ores et déjà proposé, dans les demandes de brevet français FR 1053696 déposée le 11 mai 2010 et FR 1058431 déposée le 15 octobre 2010, une technique d'émission/réception permettant de réduire la quantité d'informations transmises sur la voie de retour, reposant sur la transmission par feedback d'une information sur le canal de transmission dans un domaine transformé, et non dans le domaine fréquentiel.

Selon cette technique, il est possible de transmettre l'information sur le canal sous sa forme temporelle (réponse impulsionnelle), en utilisant une fonction de transfert spécifique basée sur une transformée de Fourier pour convertir la réponse du canal du domaine fréquentiel vers le domaine temporel. Il est également possible de transmettre l'information sur le canal sous sa forme dans un domaine transformé, en utilisant une fonction de transfert spécifique basée par exemple sur une transformée en cosinus pour convertir la réponse du canal du domaine fréquentiel vers le domaine transformé.

Cette technique présente de très bonnes performances et un facteur de compression très efficace. Toutefois, la construction de la fonction de transfert associée est relativement complexe.

Il est également connu du document WO2006/060241 (INTEL CO. [US]), publié le 08.06.2006, une technique de communications multiporteuses utilisant une information de type « feedback » entre un récepteur et un émetteur.

Il existe toutefois un besoin pour une nouvelle technique d'émission/réception dans des systèmes de transmission nécessitant une connaissance du canal à l'émission, permettant de diminuer la quantité d'informations transmises sur la voie de retour et présentant une faible complexité.

## 3. Exposé de l'invention

L'invention propose une solution nouvelle qui ne présente pas l'ensemble de ces inconvénients de l'art antérieur, sous la forme d'un procédé de réception d'un signal correspondant à un signal multiporteuse émis par un émetteur via au moins un canal de transmission, comprenant une étape d'estimation du canal, délivrant une information globale sur le canal dans le domaine fréquentiel, dite réponse fréquentielle, comprenant des échantillons fréquentiels.

Selon l'invention, un tel procédé comprend également :

- une étape de répartition des échantillons fréquentiels dans au moins deux vecteurs d'échantillons fréquentiels, un échantillon fréquentiel pouvant appartenir à plusieurs vecteurs d'échantillons fréquentiels ;
- une étape de transformation des vecteurs d'échantillons fréquentiels du domaine fréquentiel vers un domaine transformé, délivrant, pour au moins un vecteur d'échantillons fréquentiels, une réponse partielle du canal dans le domaine transformé;
- une étape de transmission, audit émetteur, d'un signal de retour portant au moins des échantillons représentatifs du canal dans le domaine transformé, extraits des réponses partielles.

L'invention propose ainsi de « fragmenter » l'information sur le canal, classiquement obtenue dans le domaine fréquentiel, et de convertir les informations fragmentées du domaine fréquentiel vers un domaine transformé, afin de retourner à l'émetteur ces informations dans le domaine transformé.

En d'autres termes, au lieu de travailler sur toute la bande de fréquence du canal, on divise cette bande en sous-bandes, et on transforme les réponses partielles du canal obtenues sur chaque sous-bande du domaine fréquentiel vers le domaine transformé. On remonte ensuite à l'émetteur des échantillons représentatifs du canal dans le domaine transformé, extraits des différentes réponses partielles.

En transmettant l'information sur le canal sous une forme fragmentée et dans un domaine transformé, on diminue la quantité d'informations transmises du récepteur vers l'émetteur et la complexité de détermination de ces informations.

En particulier, la répartition des échantillons fréquentiels de la réponse fréquentielle dans plusieurs vecteurs d'échantillons fréquentiels (encore appelés « blocs ») permet de diminuer la taille des matrices de transfert utilisées lors de la transformation du domaine fréquentiel vers le domaine transformé, et donc la complexité de calcul. De plus, la quantité d'informations transmises du récepteur vers l'émetteur est limitée à $\Delta \times 2CP/\Delta$ échantillons dans le domaine transformé (ou $\Delta \times CP/\Delta$ dans le domaine temporel), avec CP la longueur de l'intervalle de garde en nombre d'échantillons dans le domaine temporel et $\Delta$ le nombre de vecteurs d'échantillons fréquentiels.

Par ailleurs, on rappelle que la taille d'un symbole multiporteuse est classiquement de $2^k$. Or le nombre Nmod de porteuses modulées par des valeurs non nulles est généralement inférieur à $2^k$, du fait de la présence de porteuses modulées par des valeurs nulles en bordure de spectre. Le découpage en blocs permet de travailler à nouveau sur des vecteurs présentant une longueur en puissance de 2, en considérant notamment des vecteurs se chevauchant. De cette façon, il est possible d'utiliser, lors de l'étape de transformation des différents blocs, des algorithmes de transformation rapide, de type FFT/iFFT (en anglais « (Inverse) Fast Fourier Transform » pour transformée de Fourier rapide (inverse)) ou FDCT/FiDCT (en anglais « Inverse Fast Discrete Cosine Transform » pour transformée en cosinus discrète rapide (inverse)).

Selon une caractéristique particulière, la réponse fréquentielle comprend N échantillons fréquentiels, avec N le nombre de porteuses d'un symbole pilote du signal multiporteuse, et l'étape de répartition répartit dans les vecteurs d'échantillons fréquentiels uniquement les Np échantillons fréquentiels correspondant aux positions des porteuses modulées par des pilotes dédiés à l'estimation du canal du symbole pilote (Np < N).

Dans ce cas, on exclut les porteuses nulles des vecteurs d'échantillons fréquentiels. De plus, certains vecteurs d'échantillons fréquentiels obtenus se chevauchent. En d'autres termes, certains échantillons fréquentiels appartiennent à au moins deux vecteurs d'échantillons fréquentiels.

La mise en oeuvre de plusieurs vecteurs d'échantillons fréquentiels permet ainsi de moyenner la puissance du bruit sur N échantillons dans le domaine transformé, en appliquant des fonctions de transfert « classiques » aux vecteurs d'échantillons fréquentiels.

On note que le nombre et la taille des vecteurs d'échantillons fréquentiels dépendent de la capacité du système de transmission. Notamment, ces paramètres varient en fonction des caractéristiques de l'émetteur et/ou du récepteur et/ou des caractéristiques d'une fonction de transfert entre le domaine fréquentiel et le domaine transformé.

Préférentiellement, le nombre de vecteurs d'échantillons fréquentiels est une puissance de 2.

En particulier, le nombre $\Delta$ de vecteurs d'échantillons fréquentiels dépend du nombre de porteuses modulées par une valeur nulle (N-Nmod) d'un symbole multiporteuse. Plus il y a de porteuses nulles, plus il est intéressant d'avoir un nombre de vecteurs d'échantillons fréquentiels élevé. De la même façon, moins la transmission est robuste par rapport aux effets de bords, plus il est intéressant d'avoir des vecteurs d'échantillons fréquentiels se chevauchant, et donc un grand nombre de vecteurs d'échantillons fréquentiels (8 par exemple). Il faut également que le nombre d'échantillons de la réponse fréquentielle soit un multiple de $\Delta$.

La taille des vecteurs d'échantillons fréquentiels dépend du nombre Nmod de porteuses modulées par une valeur non nulle d'un symbole pilote et du nombre Np de porteuses modulées par des pilotes dédiés à l'estimation du canal du symbole pilote.

Ainsi, lorsque Nmod est égal à Np, chaque vecteur d'échantillons fréquentiels comprend N/$\Delta$ échantillons fréquentiels. Lorsque Nmod est supérieur à Np, chaque vecteur d'échantillons fréquentiels comprend $\dfrac{N/\delta}{\Delta}$ échantillons fréquentiels, avec $\delta$ le rapport entre Nmod et Np.

Selon un premier exemple de réalisation, l'étape de transformation met en oeuvre une transformée de Fourier inverse délivrant pour chaque vecteur d'échantillons fréquentiels une réponse partielle du canal dans le domaine temporel.

Dans ce cas, chaque réponse partielle comprend des échantillons représentatifs du canal localisés dans un intervalle présentant une longueur inférieure ou égale à CP/$\Delta$.

En particulier, si Nmod égal Np, l'étape de transformation met en oeuvre une multiplication de chacun des vecteurs d'échantillons fréquentiels par une matrice de Fourier inverse de taille N/$\Delta$ x N/$\Delta$. En variante, l'étape de transformation met en oeuvre une multiplication de chacun des vecteurs d'échantillons fréquentiels par une matrice de transfert de taille N/$\Delta$ x CP/$\Delta$, extraite d'une matrice de Fourier de taille N/$\Delta$ x N/$\Delta$ dans laquelle on a conservé uniquement les CP/$\Delta$ premières colonnes.

Si Nmod est supérieur à Np, l'étape de transformation met en oeuvre une multiplication de chacun des vecteurs d'échantillons fréquentiels par une matrice de Fourier inverse de taille $\dfrac{N/\delta}{\Delta} \times \dfrac{N/\delta}{\Delta}$. En variante, l'étape de transformation met en oeuvre une multiplication de chacun des vecteurs d'échantillons fréquentiels par une matrice de transfert de taille $\dfrac{N/\delta}{\Delta} \times \dfrac{CP}{\Delta}$ extraite d'une matrice de Fourier de taille $\dfrac{N/\delta}{\Delta} \times \dfrac{N/\delta}{\Delta}$ dans laquelle on a conservé uniquement les CP/$\Delta$ premières colonnes.

Selon un deuxième exemple de réalisation, l'étape de transformation met en oeuvre une transformée en cosinus délivrant pour chaque vecteur d'échantillons fréquentiels une réponse partielle du canal dans un domaine transformé.

Dans ce cas, chaque réponse partielle comprend des échantillons représentatifs du canal localisés dans un intervalle présentant une longueur inférieure ou égale à 2CP/$\Delta$.

L'utilisation d'une transformée en cosinus présente plusieurs avantages. Tout d'abord, une telle transformée est moins sensible aux effets de bords qu'une transformée de Fourier. De plus, la matrice représentative d'une telle transformée est réelle. Elle est donc moins complexe qu'une matrice de Fourier.

En particulier, si Nmod égal Np, l'étape de transformation met en oeuvre une multiplication de chacun de vecteurs d'échantillons fréquentiels par une matrice représentative d'une transformée en cosinus de taille N/$\Delta$ x N/$\Delta$. En variante, l'étape de transformation met en oeuvre une multiplication de chacun des vecteurs d'échantillons fréquentiels par une matrice de transfert de taille N/$\Delta$ x 2CP/$\Delta$, extraite d'une matrice représentative d'une transformée en cosinus de taille N/$\Delta$ x N/$\Delta$ dans laquelle on a conservé uniquement les 2CP/$\Delta$ premières colonnes.

Si Nmod est supérieur à Np, l'étape de transformation met en oeuvre une multiplication de chacun des vecteurs d'échantillons fréquentiels par une matrice représentative d'une transformée en cosinus de taille $\dfrac{N/\delta}{\Delta} \times \dfrac{N/\delta}{\Delta}$. En variante, l'étape de transformation met en oeuvre une multiplication de chacun des vecteurs d'échantillons fréquentiels par une matrice de transfert de taille $\dfrac{N/\delta}{\Delta} \times \dfrac{2CP}{\Delta}$ extraite d'une matrice représentative d'une transformée en cosinus de taille $\dfrac{N/\delta}{\Delta} \times \dfrac{N/\delta}{\Delta}$ dans laquelle on a conservé uniquement les 2CP/Δ premières colonnes.

Selon un autre mode de réalisation, la réponse fréquentielle du canal comprend N échantillons fréquentiels, et l'étape de répartition répartit les N échantillons fréquentiels dans Δ vecteurs d'échantillons fréquentiels de taille N/Δ.

Dans ce cas, les différents vecteurs d'échantillons fréquentiels obtenus ne se chevauchent pas. En d'autres termes, chaque échantillon fréquentiel appartient à un unique vecteur d'échantillons fréquentiels. De plus, on intègre les porteuses nulles dans les vecteurs d'échantillons fréquentiels.

Ce mode de réalisation est particulièrement adapté à l'utilisation de fonctions de transfert « optimisées ».

En particulier, le procédé de réception selon l'invention met en oeuvre une étape de traitement des vecteurs d'échantillons fréquentiels, préalablement à l'étape de transmission, associant à chaque vecteur d'échantillons fréquentiels un vecteur modifié comprenant uniquement les échantillons fréquentiels correspondant aux positions des Np porteuses modulées par des pilotes dédiés à l'estimation du canal du symbole pilote.

Dans ce cas, l'étape de transformation met en oeuvre une matrice de transfert pour chaque vecteur modifié, construite en tenant compte des positions des Np porteuses modulées par des pilotes dédiés à l'estimation du canal.

Par exemple, le procédé de réception comprend une étape de construction d'au moins une matrice de transfert, mettant en oeuvre les sous-étapes suivantes :

- obtention d'une matrice réduite, extraite d'une matrice représentative d'une transformée de taille N/Δ x N/Δ dans laquelle on a conservé les éléments correspondant à la position des Np porteuses modulées par des pilotes dédiés à l'estimation du canal;
- décomposition de la matrice réduite en valeurs propres ;
- détermination de la matrice de transfert, à partir d'un ensemble de valeurs propres choisies parmi lesdites valeurs propres.

Cette nouvelle matrice de transfert permet d'améliorer la précision des informations à transmettre par feedback, c'est-à-dire de remonter à l'émetteur des informations permettant une meilleure estimation du canal. On améliore ainsi la qualité du feedback.

Par exemple, la matrice représentative d'une transformée est une matrice de Fourier inverse, ou une matrice représentative d'une transformée en cosinus.

En variante, la matrice réduite est obtenue en conservant les éléments correspondant à la position des Np porteuses modulées par des pilotes dédiés à l'estimation du canal et uniquement les CL/Δ premières colonnes si la matrice représentative d'une transformée est une matrice de Fourier inverse, ou les 2CP/Δ premières colonnes si la matrice représentative d'une transformée est une matrice représentative d'une transformée en cosinus.

Dans un autre mode de réalisation, l'invention concerne un récepteur d'un signal correspondant à un signal multiporteuse émis par un émetteur via au moins un canal de transmission, ledit récepteur comprenant des moyens d'estimation du canal délivrant une information globale sur le canal dans le domaine fréquentiel, dite réponse fréquentielle, comprenant des échantillons fréquentiels.

Selon l'invention, un tel récepteur comprend également:

- des moyens de répartition des échantillons fréquentiels dans au moins deux vecteurs d'échantillons fréquentiels, un échantillon fréquentiel pouvant appartenir à plusieurs vecteurs d'échantillons fréquentiels ;
- des moyens de transformation des vecteurs d'échantillons fréquentiels du domaine fréquentiel vers un domaine transformé, délivrant, pour au moins un vecteur d'échantillons fréquentiels, une réponse partielle du canal dans le domaine transformé ;
- des moyens de transmission, audit émetteur, d'un signal de retour portant au moins des échantillons représentatifs du canal dans le domaine transformé, extraits des réponses partielles.

Un tel récepteur est notamment adapté à mettre en oeuvre le procédé de réception décrit précédemment. Il s'agit par exemple d'un point d'accès d'un réseau Wifi, dans le cas d'une liaison montante, ou d'une station d'un ensemble de services de base d'un réseau Wifi, dans le cas d'une liaison descendante.

Ce récepteur pourra bien sûr comporter les différentes caractéristiques relatives au procédé de réception selon l'invention. Ainsi, les caractéristiques et avantages de ce récepteur sont les mêmes que ceux du procédé de réception, et ne sont pas détaillés plus amplement.

L'invention concerne aussi un signal de retour transmis selon le procédé de réception décrit précédemment, portant au moins les échantillons représentatifs du canal dans le domaine transformé extraits des réponses partielles. Ce signal de retour peut, selon un mode dégradé de l'invention, porter des échantillons temporels représentatifs d'un bruit.

En particulier, alors que le feedback est effectué par l'envoi des CP premiers échantillons de la réponse temporelle du canal, ou des 2CP premiers échantillons de la réponse du canal dans le domaine transformé selon la technique de transmission par feedback d'une réponse globale sur le canal dans un domaine transformé, l'invention propose de transmettre $\Delta$ ensembles de CP/$\Delta$ échantillons de la réponse temporelle du canal, ou de 2CP/$\Delta$ échantillons de la réponse du canal dans le domaine transformé, ce qui permet de moyenner le bruit et de réduire la complexité.

Un tel signal de retour peut bien sûr comporter les différentes caractéristiques relatives au procédé de réception décrit précédemment. Il s'agit par exemple d'un message CQI (de l'anglais « Channel Quality Indicator » pour « indicateur de qualité du canal »).

L'invention concerne encore un procédé d'émission d'un signal multiporteuse via au moins un canal de transmission, comprenant les étapes suivantes :

- réception d'un signal de retour transmis selon le procédé de réception décrit ci-dessus, délivrant au moins deux ensembles comprenant des échantillons représentatifs du canal dans le domaine transformé, associés chacun à une réponse partielle distincte ;
- transformation des ensembles vers le domaine fréquentiel, délivrant des vecteurs d'échantillons fréquentiels ;
- recombinaison des vecteurs d'échantillons fréquentiels, délivrant une information globale sur le canal dans le domaine fréquentiel.

En plus des opérations classiquement effectuées à l'émission, on propose selon l'invention de transformer les informations partielles sur le canal, véhiculées par le signal de retour, du domaine temporel vers le domaine fréquentiel, puis de recombiner les informations partielles ainsi obtenues dans le domaine fréquentiel pour obtenir une information globale sur le canal. On traite donc indépendamment chaque bloc, avant de les réassembler.

De cette façon, on dispose à l'émission d'une bonne connaissance du canal. En effet, la transmission d'informations sur le canal dans un domaine transformé dans le signal de retour permet une meilleure estimation du canal, du fait de la précision des informations obtenues en réception. On augmente de cette façon l'efficacité des systèmes nécessitant une connaissance du canal à l'émission.

De plus, on peut réutiliser l'ensemble des fonctions existantes pour la mise en forme du signal multiporteuse à l'émission.

Par exemple, l'étape de transformation met en oeuvre les étapes suivantes, pour au moins un ensemble comprenant des échantillons représentatifs du canal dans le domaine transformé :

- construction d'un vecteur d'échantillons dans le domaine transformé de taille N/$\Delta$, comprenant ledit ensemble et des éléments nuls;
- multiplication du vecteur d'échantillons dans le domaine transformé par une matrice de transfert de taille N/$\Delta$xN/$\Delta$, délivrant un vecteur d'échantillons fréquentiels de taille N/$\Delta$.

Selon un autre exemple, l'étape de transformation met en oeuvre, pour au moins un ensemble comprenant des échantillons représentatifs du canal dans le domaine transformé, une étape de multiplication dudit ensemble dans le domaine transformé par une matrice de transfert de taille CP/$\Delta$ x N/$\Delta$, extraite d'une matrice représentative d'une transformée de taille N/$\Delta$x N/$\Delta$, délivrant un vecteur d'échantillons fréquentiels de taille N/$\Delta$.

Selon ces exemples, la matrice représentative d'une transformée est une matrice de Fourier, ou une matrice représentative d'une transformée en cosinus inverse.

Selon un autre aspect de l'invention, l'étape de recombinaison met en oeuvre une concaténation des vecteurs d'échantillons fréquentiels. En d'autres termes, les vecteurs d'échantillons fréquentiels regénérés au niveau de l'émetteur sont mis bout à bout, en tenant compte de leurs indices.

En particulier, lorsqu'un vecteur global obtenu par concaténation des vecteurs d'échantillons fréquentiels présente un nombre d'échantillons fréquentiels supérieur au nombre de porteuses Np d'un symbole pilote, l'étape de recombinaison affecte une valeur nulle aux échantillons fréquentiels d'extrémité du vecteur global. De cette façon, le vecteur obtenu à l'issue de l'étape de recombinaison comprend Np échantillons fréquentiels.

Selon encore un autre aspect de l'invention, lorsqu'un échantillon fréquentiel appartient à plusieurs vecteurs d'échantillons fréquentiels, l'étape de recombinaison effectue une moyenne des valeurs affectées à cet échantillon fréquentiel dans les différents vecteurs d'échantillons fréquentiels.

En variante, lorsqu'un échantillon fréquentiel appartient à plusieurs vecteurs d'échantillons fréquentiels, l'étape de recombinaison sélectionne une valeur parmi les valeurs affectées à cet échantillon fréquentiel dans les différents vecteurs d'échantillons fréquentiels.

Dans un autre mode de réalisation, l'invention concerne un émetteur d'un signal multiporteuse via au moins un canal de transmission, comprenant :

- des moyens de réception d'un signal de retour transmis par un récepteur tel que décrit précédemment, délivrant au moins deux ensembles comprenant des échantillons représentatifs du canal dans le domaine transformé, associés chacun à une réponse partielle distincte ;
- des moyens de transformation des ensembles vers le domaine fréquentiel, délivrant des vecteurs d'échantillons fréquentiels ;
- des moyens de recombinaison des vecteurs d'échantillons fréquentiels, délivrant une information globale sur le canal dans le domaine fréquentiel.

Un tel émetteur est notamment adapté à mettre en oeuvre le procédé d'émission décrit précédemment. Il s'agit par exemple d'un point d'accès d'un réseau Wifi, dans le cas d'une liaison descendante, ou d'une station d'un ensemble de services de base d'un réseau Wifi, dans le cas d'une liaison montante.

Cet émetteur pourra bien sûr comporter les différentes caractéristiques relatives au procédé d'émission selon l'invention. Ainsi, les caractéristiques et avantages de cet émetteur sont les mêmes que ceux du procédé d'émission, et ne sont pas détaillés plus amplement.

Un autre aspect de l'invention concerne un programme d'ordinateur comportant des instructions pour la mise en oeuvre du procédé d'émission et/ou du procédé de réception décrits ci-dessus, lorsque le programme est exécuté par un processeur. Un tel programme peut utiliser n'importe quel langage de programmation. Il peut être téléchargé depuis un réseau de communication et/ou enregistré sur un support lisible par ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1 et 2 illustrent les principales étapes mises en oeuvre respectivement par le procédé de réception et le procédé d'émission selon l'invention ;
- les figures 3A, 3B et 4 présentent un premier exemple de réalisation mettant en oeuvre une fonction de transfert de type transformée de Fourier classique, dans le cas $Np = Nmod$ (figures 3A et 3B) ou dans le cas $Np < Nmod$ (figure 4) ;
- les figures 5A, 5B et 6 présentent un deuxième exemple de réalisation mettant en oeuvre une fonction de transfert de type transformée en cosinus classique, dans le cas $Np = Nmod$ (figures 5A et 5B) ou dans le cas $Np < Nmod$ (figure 6) ;
- les figures 7 et 8 illustrent un troisième exemple de réalisation mettant en oeuvre une fonction de transfert de type transformée de Fourier optimisée, dans le cas $Np = Nmod$ (figure 7) ou dans le cas $Np < Nmod$ (figure 8) ;
- la figure 9 présente un quatrième exemple de réalisation mettant en oeuvre une fonction de transfert de type transformée en cosinus optimisée, dans le cas $Np = Nmod$ ;
- les figures 10A et 10B illustrent les performances de l'invention, selon le deuxième exemple de réalisation ;
- les figures 11A et 11B présentent un exemple de chaîne d'émission et de réception;
- les figures 12A et 12B illustrent schématiquement la structure d'un émetteur et d'un récepteur selon un mode de réalisation de l'invention.

## 5. Description d'un mode de réalisation de l'invention

### 5.1 Notations

Afin de faciliter la lecture du document, on présente ci-après les notations utilisées.

On considère un signal multiporteuse, formé d'une succession temporelle de symboles multiporteuses. Certains symboles multiporteuses de ce signal comprennent des porteuses modulées par des éléments de référence appelés pilotes, connus d'au moins un récepteur destiné à effectuer une réception du signal multiporteuse. De tels symboles sont appelés symboles pilotes.

On note :

- N le nombre de sous-porteuses (encore appelées porteuses) d'un symbole multiporteuse (correspondant à la taille de la modulation) ;
- Nmod le nombre de porteuses modulées par une valeur non nulle d'un symbole multiporteuse ;

- (N-Nmod) le nombre de porteuses modulées par une valeur nulle localisées aux bords du spectre du signal multiporteuse et/ou au centre du spectre (encore appelées porteuses nulles, ou porteuses non modulées) ;
- Np le nombre de porteuses modulées par un pilote, dédié à l'estimation du canal en cours d'utilisation, d'un symbole pilote ($Np \leq N$mod);
- $\delta$ le rapport Nmod et Np ;
- CP le nombre d'échantillons de l'intervalle de garde (ou préfixe cyclique) du signal multiporteuse ;
- $\Delta$ le nombre de vecteurs d'échantillons fréquentiels.

On rappelle que dans les systèmes de transmission actuels, on insère classiquement des porteuses nulles en bordure du spectre du signal multiporteuse, notamment pour éviter un recouvrement spectral avec d'autres applications utilisant des bandes de fréquence voisines. Il est également classique d'insérer une porteuse nulle au milieu du spectre du signal multiporteuse (DC). Le nombre N de porteuses d'un symbole multiporteuse est donc généralement supérieur au nombre Nmod de porteuses modulées par une valeur non nulle (N>Nmod).

De plus, dans le cas MIMO par exemple, il est possible d'avoir un symbole multiporteuse dont les Nmod porteuses modulées par une valeur non nulle sont des pilotes. Toutefois, certains de ces pilotes peuvent être utilisés pour estimer un canal de transmission entre un couple d'antennes d'émission et de réception, et d'autres pour estimer un autre canal de transmission entre un autre couple d'antennes d'émission et de réception. Dans ce cas, on note Np le nombre de pilotes correspondant au canal en cours d'estimation.

*5.2 Principe général*

L'invention s'inscrit dans le contexte des communications nécessitant une connaissance du canal de transmission à l'émission, où au moins un canal de transmission est défini entre un émetteur (comprenant une ou plusieurs antennes d'émission) et un récepteur (comprenant une ou plusieurs antennes de réception).

Le principe général de l'invention repose sur la transmission, du récepteur vers l'émetteur, d'une information sur au moins un canal de transmission sous sa forme dans un domaine transformé (comme le domaine temporel), et non sous sa forme fréquentielle, ce qui permet une compression des informations transmises sur la voie de retour.

De plus, l'information sur le canal obtenue dans le domaine fréquentiel au niveau du récepteur est préalablement divisée en plusieurs informations « partielles » dans le domaine fréquentiel, avant conversion dans le domaine transformé, ce qui permet de réduire la complexité de cette technique de « feedback ».

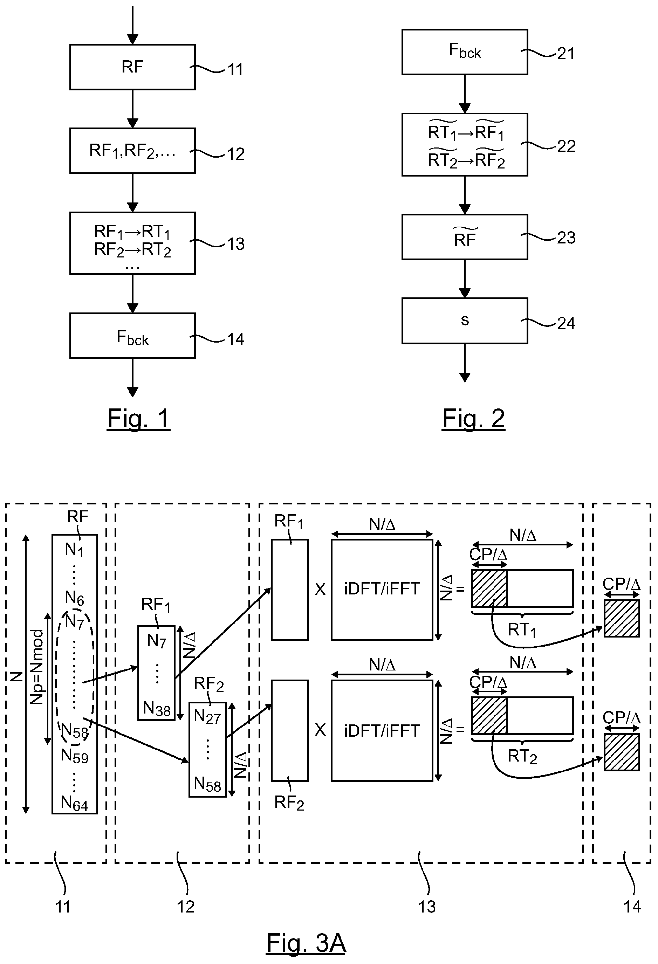

La figure 1 illustre les principales étapes mises en oeuvre par un procédé de réception d'un signal correspondant à un signal multiporteuse, par exemple de type OFDM, émis par un émetteur via au moins un canal de transmission, selon un mode de réalisation de l'invention. Un tel procédé selon l'invention peut être mis en oeuvre de diverses manières, notamment sous forme câblée ou sous forme logicielle.

Selon ce mode de réalisation, on estime le canal de transmission au cours d'une étape d'estimation 11, délivrant une information globale sur le canal dans le domaine fréquentiel, dite réponse fréquentielle RF. Cette estimation du canal est obtenue de manière classique, par exemple en utilisant les Np pilotes dédiés à l'estimation de ce canal du signal multiporteuse.

La réponse fréquentielle RF peut se présenter directement sous une forme échantillonnée à l'issue de l'étape d'estimation, ou bien subir une étape d'échantillonnage, de façon à s'exprimer sous la forme d'un ensemble d'échantillons fréquentiels.

Au cours d'une étape suivante de répartition 12, les échantillons fréquentiels de la réponse fréquentielle RF sont répartis dans au moins deux vecteurs d'échantillons fréquentiels ($RF_1$), $RF_2$, ...). On note qu'un échantillon fréquentiel peut appartenir à plusieurs vecteurs d'échantillons fréquentiels.

On transforme ensuite les vecteurs d'échantillons fréquentiels ($RF_1$, $RF_2$, ...) du domaine fréquentiel vers un domaine transformé au cours d'une étape de transformation 13, délivrant, pour au moins un vecteur d'échantillons fréquentiels, une réponse partielle du canal dans le domaine transformé ($RT_1$, $RT_2$, ...). Par exemple, une telle transformation est de type transformée de Fourier, transformée en cosinus ou en sinus, transformée ondelettes, etc.

Les réponses partielles du canal dans le domaine transformé ($RT_1$, $RT_2$, ...) ainsi obtenues comprennent à la fois des échantillons représentatifs du canal et des échantillons représentatifs d'un bruit dans le domaine transformé.

On transmet alors à l'émetteur, au cours d'une étape de transmission 14, au moins les échantillons représentatifs du canal dans le domaine transformé, extraits des réponses partielles, dans un signal de retour, encore appelé feedback Fbck.

Selon ce mode de réalisation, les échantillons représentatifs du canal dans le domaine transformé, correspondant à l'énergie utile du canal, sont localisés dans un intervalle présentant une longueur, en nombre d'échantillons, inférieure ou égale à 2CP/$\Delta$ si l'on utilise une transformée en cosinus par exemple, voire inférieure ou égale à CP/$\Delta$ si l'on utilise une transformée de Fourier.

La figure 2 illustre les principales étapes mises en oeuvre par un procédé d'émission d'un signal multiporteuse correspondant, selon un mode de réalisation de l'invention. Un tel procédé peut être mis en oeuvre de diverses manières, notamment sous forme câblée ou sous forme logicielle.

Plus précisément, afin d'adapter l'émission au canal de transmission, un tel procédé met en oeuvre les étapes suivantes :

- réception 21 d'un signal de retour transmis selon le procédé de réception décrit ci-dessus, délivrant au moins deux ensembles comprenant des échantillons représentatifs du canal dans le domaine transformé, associés chacun à une réponse partielle distincte ;
- transformation 22 des ensembles vers le domaine fréquentiel, délivrant des vecteurs d'échantillons fréquentiels (RF1, RF2, etc) ;
- recombinaison 23 des vecteurs d'échantillons fréquentiels, délivrant une information globale sur le canal dans le domaine fréquentiel;
- éventuellement, mise en forme 24 du signal multiporteuse tenant compte de l'information globale.

*5.3 Utilisation des fonctions de transfert classiques*

On décrit ci-après deux exemples de réalisation de l'invention, mettant en oeuvre d'une part une transformée de Fourier « classique » et d'autre part une transformée en cosinus « classique » lors des étapes de transformation entre le domaine fréquentiel et un domaine trasnformé.

*A) Transformation mettant en oeuvre une transformée de Fourier*

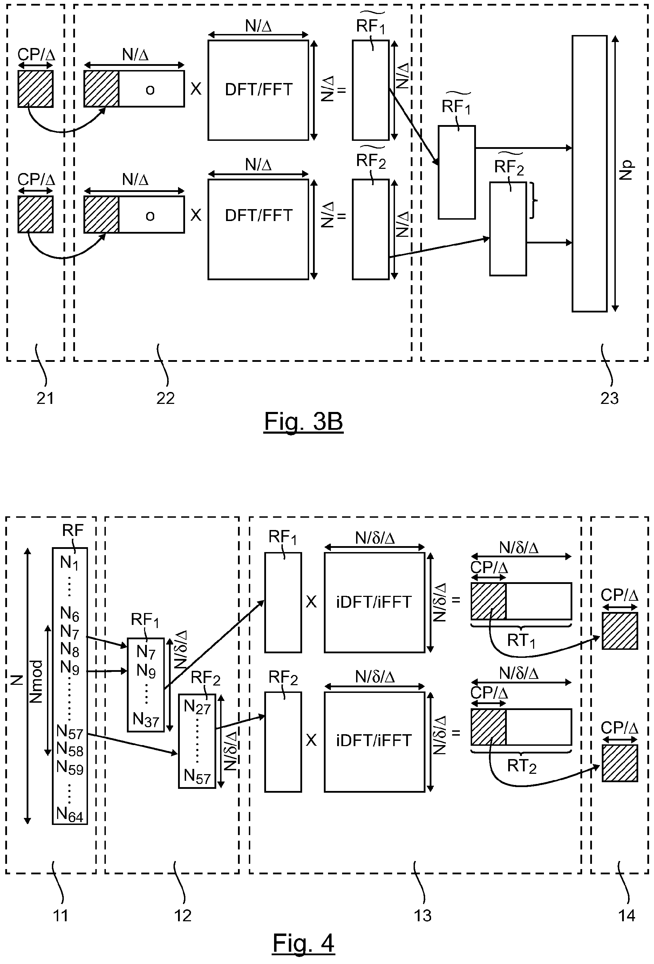

On présente en relation avec les figures 3A, 3B et 4 un premier exemple de mise en oeuvre de l'invention, basé sur l'utilisation d'une transformée de Fourier.

*1. Np = Nmod,*

On considère également, selon ce premier exemple, que Np est égal à Nmod, comme illustré en figures 3A et 3B. De plus, on considère que des porteuses nulles ont été insérées en bordure et/ou au milieu du spectre du signal multiporteuse (Nmod < N).

A titre d'exemple, N est égal à 64 et Nmod est égal à 52.

Comme illustré en figure 3A, côté récepteur (station par exemple), la réponse fréquentielle RF du canal de transmission obtenue à l'issue de l'étape d'estimation 11 comprend, sous sa forme échantillonnée, N échantillons fréquentiels, notés N1, N2, ..., N64.

L'étape de répartition 12 répartit alors dans des vecteurs d'échantillons fréquentiels Np échantillons fréquentiels parmi les N échantillons fréquentiels, correspondant aux positions des porteuses modulées par un pilote dédié à l'estimation du canal du symbole pilote. C'est en effet à ces positions que se concentre l'énergie utile du signal multiporteuse. On obtient à l'issue de l'étape de répartition, donc selon ce mode de réalisation,$\Delta$ vecteurs d'échantillons fréquentiels, comprenant chacun N/$\Delta$ échantillons fréquentiels. Selon cet exemple, certains échantillons fréquentiels appartiennent à plusieurs vecteurs d'échantillons fréquentiels, puisque Np = Nmod < N.

Comme indiqué précédemment, le nombre de vecteurs d'échantillons fréquentiels est préférentiellement une puissance de 2 ($\Delta$ = 2, 4, 8, 16...). Ce nombre est déterminé en tenant compte des caractéristiques de l'émetteur et/ou du récepteur (nombre d'antennes d'émission et/ou de réception, modulation/démodulation utilisée, etc) et/ou des caractéristiques de la fonction de transfert entre le domaine fréquentiel et le domaine transformé. Ainsi, pour une fonction de transfert de type Fourier, une répartition des échantillons fréquentiels dans deux vecteurs est bien adaptée.

Selon l'exemple illustré en figure 3A, le nombre $\Delta$ de vecteurs d'échantillons fréquentiels est donc égal à 2. Chaque vecteur d'échantillons fréquentiels comprend alors N/$\Delta$ = 32 échantillons fréquentiels, le premier vecteur d'échantillons fréquentiels RF1 comprenant les échantillons correspondant aux positions des 32 premiers pilotes dédiés à l'estimation du canal (correspondant aux positions $\frac{N}{2} \frac{N - N\,\mathrm{mod}}{2} + 1$ à $\frac{N}{2} \frac{N - N\,\mathrm{mod}}{2} + \frac{N}{2}$, soit N7 à N38) et le deuxième vecteur d'échantillons fréquentiels RF2 comprenant les échantillons correspondant aux positions des 32 derniers pilotes dédiés à l'estimation du canal (correspondant aux positions $N_{N-\left(\frac{N-N\bmod}{2}\right)-\frac{N}{2}+1}$ à $N_{N-\left(\frac{N-N\bmod}{2}\right)}$, soit N27 à N58). On constate que ces deux vecteurs d'échantillons fréquentiels RF1 et RF2 se chevauchent, les échantillons fréquentiels N27 à N38 appartenant aux deux vecteurs d'échantillons fréquentiels.

Au cours d'une étape suivante de transformation 13, on applique une transformée de Fourier inverse aux vecteurs d'échantillons fréquentiels RF1 et RF2, délivrant pour chaque vecteur d'échantillons fréquentiels, une réponse partielle du canal dans le domaine temporel, notée respectivement RT1 et RT2. Par exemple, une telle transformée de Fourier est de type iDFT ou iFFT.

Dans ce cas, chaque réponse partielle comprend des échantillons temporels représentatifs du canal localisés dans un intervalle présentant une longueur inférieure ou égale (en nombre d'échantillons temporels) à celle de l'intervalle de garde CP du signal multiporteuse divisée par Δ.

Comme illustré en figure 3A, l'étape de transformation 13 met par exemple en oeuvre une multiplication de chacun des vecteurs d'échantillons fréquentiels par une matrice de transfert de type matrice de Fourier inverse de taille N/Δ x N/Δ. Les réponses partielles du canal dans le domaine temporel ainsi obtenues, RT1 et RT2, comprennent chacune N/Δ échantillons temporels, comprenant des échantillons temporels représentatifs du canal localisés dans l'intervalle CP/Δ et des échantillons temporels représentatifs d'un bruit dans l'intervalle (N-CP)/Δ.

Lors de l'étape de transmission 14 d'un signal de retour, il n'est pas nécessaire de retourner à l'émetteur les échantillons temporels représentatifs du bruit. On transmet donc soit les CP/Δ premiers échantillons temporels des différentes réponses partielles (correspondant aux parties hachurées de la figure 3A), soit uniquement les échantillons temporels représentatifs du canal localisés dans l'intervalle CP/Δ.

Selon une variante, non illustrée, l'étape de transformation 13 met en oeuvre une multiplication de chacun des vecteurs d'échantillons fréquentiels par une matrice de transfert de taille N/Δ x CP/Δ extraite d'une matrice de Fourier inverse de taille N/Δ x N/Δ dans laquelle on a conservé uniquement les CP/Δ premières colonnes. Les réponses partielles du canal dans le domaine temporel ainsi obtenues, RT1 et RT2, comprennent alors des échantillons temporels représentatifs du canal localisés sur les CP. premiers échantillons A nouveau, on transmet à l'émetteur soit les CP/Δ échantillons temporels, soit uniquement les échantillons temporels représentatifs du canal localisés dans l'intervalle CP/Δ, des réponses partielles RT1 et RT2.

Comme illustré en figure 3B, côté émetteur (point d'accès par exemple), le signal de retour reçu (21) comprend au moins deux ensembles comprenant des échantillons représentatifs du canal dans le domaine transformé, associés chacun à une réponse partielle distincte. Chaque ensemble comprend CP/Δ échantillons temporels, ou uniquement les échantillons temporels représentatifs du canal localisés dans l'intervalle CP/Δ.

Ces ensembles sont alors transformés du domaine temporel vers le domaine fréquentiel, en utilisant une transformée inverse à celle mise en oeuvre côté récepteur (transformée de Fourier de type DFT ou FFT par exemple).

Plus précisément, selon l'exemple illustré en figure 3B, l'étape de transformation 22 met en oeuvre les étapes suivantes, pour au moins un des ensembles :

- construction d'un vecteur d'échantillons dans le domaine transformé de taille N/A, comprenant ledit ensemble (comprenant CL/Δ échantillons temporels, ou uniquement les échantillons temporels représentatifs du canal localisés dans l'intervalle CP/Δ) et des éléments nuls. En d'autres termes, on « complète » l'ensemble dans le domaine transformé pour obtenir un vecteur d'échantillons dans le domaine transformé comprenant N/Δ échantillons (32 selon l'exemple illustré), en ajoutant des éléments nuls après les CP/Δ échantillons temporels, ou après les échantillons temporels représentatifs du canal localisés dans l'intervalle CP/Δ;
- multiplication par une matrice de transfert de taille N/Δx N/Δ (FFT ou DFT), délivrant un vecteur d'échantillons fréquentiels de taille N/Δ.

On obtient de cette façon deux vecteurs d'échantillons fréquentiels $\widetilde{RF1}$ et $\widetilde{RF2}$, comprenant chacun N/Δ= 32 échantillons fréquentiels, correspondant aux vecteurs d'échantillons fréquentiels RF1 et RF2 obtenus côté récepteur.

Au cours de l'étape suivante de recombinaison 23, on recombine les vecteurs d'échantillons fréquentiels afin d'obtenir une information globale sur le canal dans le domaine fréquentiel, sur Np échantillons fréquentiels.

En particulier, lorsqu'un échantillon fréquentiel appartient à plusieurs vecteurs d'échantillons fréquentiels, l'étape de recombinaison peut effectuer une moyenne des valeurs affectées à cet échantillon dans les différents vecteurs d'échantillons fréquentiels. Par exemple, les échantillons fréquentiels N27 à N38 appartiennent aux deux vecteurs d'échantillons fréquentiels $\widetilde{RF1}$ et $\widetilde{RF2}$. Le vecteur « global » correspondant à la combinaison des vecteurs d'échan-

tillons fréquentiels $\widetilde{RF1}$ et $\widetilde{RF2}$, comprenant Np = 52 échantillons fréquentiels, comprend alors :

- aux positions N7 à N26 : les valeurs du vecteur d'échantillons fréquentiels $\widetilde{RF1}$ à ces mêmes positions ;

- aux positions N39 à N58 : les valeurs du vecteur d'échantillons fréquentiels $\widetilde{RF2}$ à ces mêmes positions, et

- aux positions N27 à N38 : pour chaque position, une moyenne de la valeur du vecteur d'échantillons fréquentiels $\widetilde{RF1}$ et de la valeur du vecteur d'échantillons fréquentiels $\widetilde{RF2}$ à cette même position.

En variante, l'étape de recombinaison 23 sélectionne une valeur parmi les valeurs affectées à cet échantillon dans les différents vecteurs d'échantillons fréquentiels.

Ainsi, le vecteur global comprend par exemple :

- aux positions N7 à N38 : les valeurs du vecteur d'échantillons fréquentiels $\widetilde{RF1}$ à ces mêmes positions ;

- aux positions N39 à N58 : les valeurs du vecteur d'échantillons fréquentiels $\widetilde{RF2}$ à ces mêmes positions.

Le signal multiporteuse peut alors être mis en forme (24) en tenant compte de cette information globale.

Si, selon la variante présentée en relation avec le récepteur, l'étape de transformation 13 met en oeuvre une multiplication de chacun des vecteurs d'échantillons fréquentiels par une matrice de transfert de type matrice de Fourier inverse de taille N/$\Delta$ x CP/$\Delta$ extraite d'une matrice de Fourier inverse de taille N/$\Delta$ x N/$\Delta$ dans laquelle on a conservé uniquement les CP/$\Delta$ premières colonnes, alors il n'est pas nécessaire d'ajouter des éléments nuls pour construire des vecteurs d'échantillons dans le domaine transformé de taille N/$\Delta$ lors de l'étape de transformation 22.

En effet, les réponses partielles du canal dans le domaine temporel ainsi obtenues, RT1 et RT2, comprennent chacune CP/$\Delta$ échantillons temporels. Selon cette variante, on multiplie donc directement au moins un ensemble d'échantillons dans le domaine transformé par une matrice de transfert de taille CP/$\Delta$ x N/$\Delta$, extraite d'une matrice de Fourier de taille N/$\Delta$ x N/$\Delta$ (FFT ou DFT) dans laquelle on a conservé uniquement les CP/$\Delta$ premières lignes, pour obtenir un vecteur d'échantillons fréquentiels de taille N/$\Delta$.

*2. Nmod > Np*

On considère désormais que Nmod est supérieur à Np, comme illustré en figure 4.

Par exemple, les pilotes dédiés à l'estimation du canal de transmission sont répartis dans un symbole pilote selon un motif régulier. On a donc *Np = N mod/ $\delta$*, avec 1/$\delta$ le facteur de répétition des pilotes. De plus, des porteuses nulles ont été insérées en bordure et/ou au milieu du spectre du signal multiporteuse (Nmod < N).

A titre d'exemple, N est égal à 64, Nmod est égal à 52 et le facteur de répétition des pilotes est égal à 1/2. On a donc Np égal à 26. Selon cet exemple, un symbole pilote comprend une alternance de pilotes dédiés à l'estimation du canal de transmission, notés P, et de données utiles ou pilotes dédiés à l'estimation d'un autre canal de transmission, notés D.

Comme illustré en figure 4, côté récepteur, la réponse fréquentielle RF du canal de transmission obtenue à l'issue de l'étape d'estimation 11 comprend, sous sa forme échantillonnée, N échantillons fréquentiels, notés N1, N2, ..., N64.

Parmi ces N = 64 échantillons fréquentiels, les six premiers (N1 à N6) et six derniers (N59 à N64) correspondent à des positions de porteuses modulées par une valeur nulle d'un symbole multiporteuse du signal. Les Nmod = 52 échantillons restants correspondent à des positions de porteuses modulées par une valeur non nulle du symbole multiporteuse (P ou D). Par exemple, parmi ces 52 échantillons fréquentiels restants, les échantillons présentant un indice impair (N7, N9, N11, .., N57) correspondent à des pilotes P, et les échantillons présentant un indice pair (N8, N10, N12, .., N58) correspondent à des données utiles D.

L'étape de répartition 12 répartit alors dans $\Delta$ vecteurs d'échantillons fréquentiels les Np échantillons fréquentiels correspondant aux positions des porteuses modulées par un pilote dédié à l'estimation du canal P. C'est en effet à ces positions que se concentre l'énergie utile du signal multiporteuse.

Selon l'exemple illustré en figure 4, $\Delta$ est égal à 2. En effet, on rappelle qu'une répartition des échantillons fréquentiels dans deux vecteurs est bien adaptée pour une transformée de type Fourier.

Chaque vecteur d'échantillons fréquentiels comprend alors $\dfrac{N/\delta}{\Delta} = 16$ échantillons fréquentiels, le premier vecteur d'échantillons fréquentiels RF1 comprenant les échantillons correspondant aux positions des 16 premiers pilotes P dédiés à l'estimation du canal (correspondant aux positions présentant des indices impairs N7, N9, N11, ..., N35, N37), et le deuxième vecteur d'échantillons fréquentiels RF2 comprenant les 16 échantillons correspondant aux positions des 16 derniers pilotes P dédiés à l'estimation du canal (correspondant aux positions présentant des indices impairs N27, N29, N31, ... N55, N57). On constate que ces deux vecteurs d'échantillons fréquentiels RF1 et RF2 se chevauchent, les échantillons fréquentiels N27, N29, N31, N33, N35 et N37 appartenant aux deux vecteurs d'échantillons fréquentiels RF1 et RF2.

Au cours d'une étape suivante de transformation 13, on applique une transformée de Fourier inverse aux vecteurs d'échantillons fréquentiels RF1 et RF2, délivrant pour chaque vecteur d'échantillons fréquentiels une réponse partielle du canal dans le domaine temporel, notée respectivement RT1 et RT2. Par exemple, une telle transformée de Fourier est de type iDFT ou iFFT

Dans ce cas, chaque réponse partielle comprend des échantillons temporels représentatifs du canal localisés dans un intervalle présentant une longueur inférieure ou égale (en nombre d'échantillons temporels) à CP/Δ, avec Np > CP.

Comme illustré en figure 4, l'étape de transformation 13 met par exemple en oeuvre une multiplication de chacun des vecteurs d'échantillons fréquentiels par une matrice de transfert de type matrice de Fourier inverse de taille $\dfrac{N/\delta}{\Delta} \times \dfrac{N/\delta}{\Delta}$. Les réponses partielles du canal dans le domaine temporel ainsi obtenues, RT1 et RT2, comprennent

chacune $\dfrac{N/\delta}{\Delta}$ échantillons temporels, comprenant des échantillons temporels représentatifs du canal localisés dans l'intervalle CP/Δ et des échantillons temporels représentatifs d'un bruit dans l'intervalle $\dfrac{N/\delta - CP}{\Delta}$.

Lors de l'étape de transmission 14 d'un signal de retour, il n'est pas nécessaire de retourner à l'émetteur les échantillons temporels représentatifs du bruit. On transmet donc soit les CP/Δ premiers échantillons temporels des différentes réponses partielles (correspondant aux parties hachurées de la figure 4), soit uniquement les échantillons temporels représentatifs du canal localisés dans l'intervalle CP/Δ.

Selon une variante, non illustrée, l'étape de transformation 13 met en oeuvre une multiplication de chacun des vecteurs d'échantillons fréquentiels par une matrice de transfert de taille $\dfrac{N/\delta}{\Delta} \times \dfrac{CP}{\Delta}$, extraite d'une matrice de Fourier inverse de taille $\dfrac{N/\delta}{\Delta} \times \dfrac{N/\delta}{\Delta}$ dans laquelle on a conservé uniquement les CP/Δ premières colonnes. Les réponses partielles du canal dans le domaine temporel ainsi obtenues, RT1 et RT2, comprennent alors des échantillons temporels représentatifs du canal localisés sur les CP/Δ premiers échantillons. A nouveau, on transmet à l'émetteur soit les CP/Δ échantillons temporels, soit uniquement les échantillons temporels représentatifs du canal localisés dans l'intervalle CP/Δ, des réponses partielles RT1 et RT2.

Les opérations mises en oeuvre côté émetteur sont identiques à celles décrites pour le cas Np égal à Nmod, avec des tailles de matrices et de vecteurs d'échantillons temporels et/ou fréquentiels similaires. Elles ne sont donc pas décrites de nouveau dans ce cas où Np est inférieur à Nmod.

*B) Transformation mettant en oeuvre une DCT*

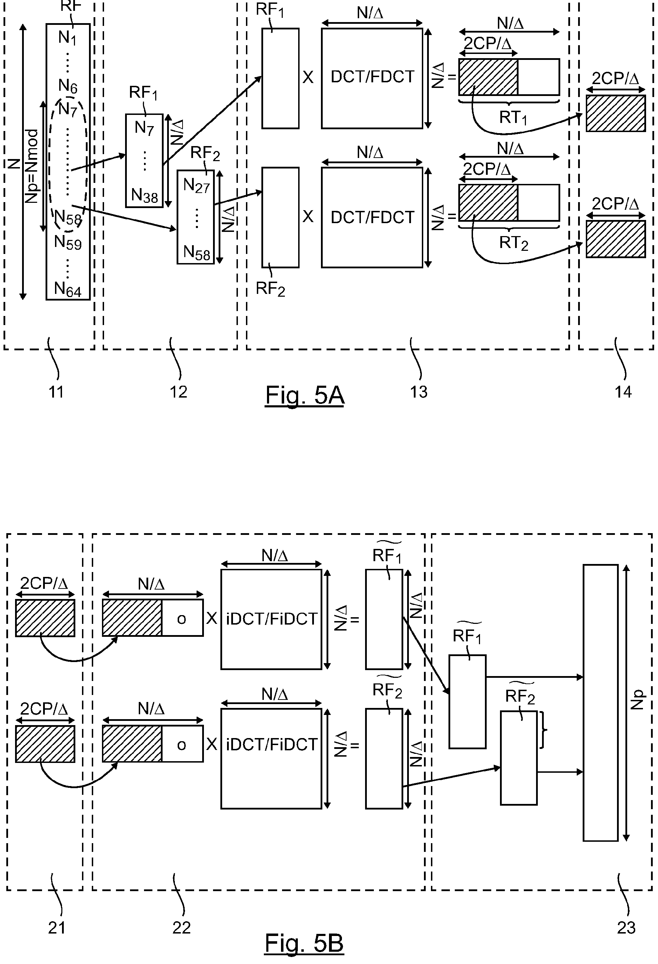

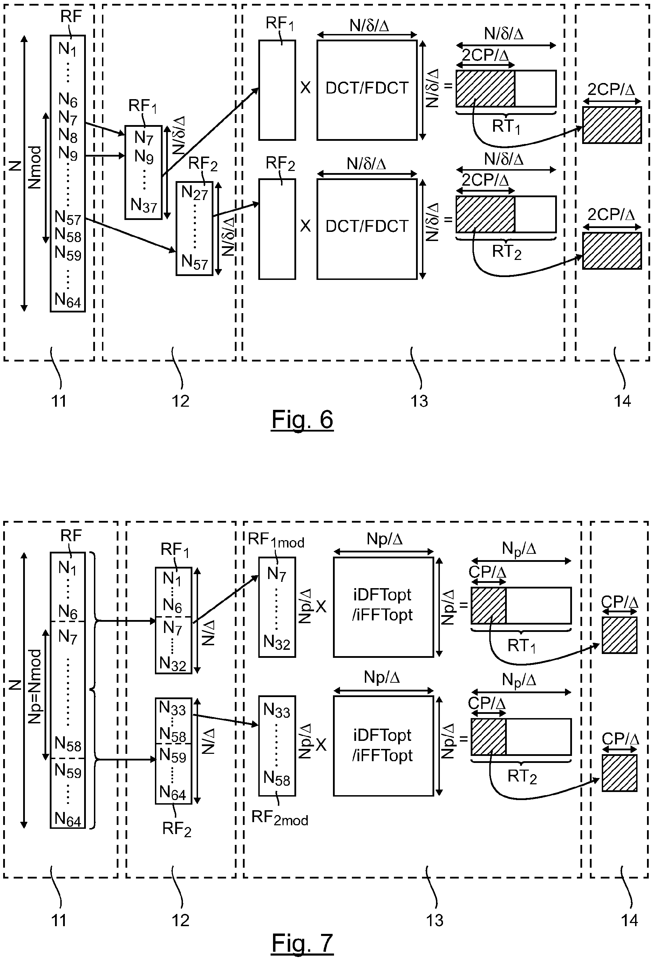

On présente désormais, en relation avec les figures 5A, 5B et 6, un deuxième exemple de mise en oeuvre de l'invention, basé sur l'utilisation d'une transformée de type DCT.

*1. Np = Nmod*

On considère également, selon ce deuxième exemple, que Np est égal à Nmod, comme illustré en figures 5A et 5B. De plus, on considère que des porteuses nulles ont été insérées en bordure et/ou au milieu du spectre du signal multiporteuse (Nmod<N).

A titre d'exemple, N est égal à 64, Nmod est égal à 52 et Δ est égal à 2.

Les étapes d'estimation du canal 11 et de répartition 12 selon ce deuxième exemple sont similaires à celles décrites en relation avec la figure 3A et le premier exemple. Par conséquent, elles ne sont pas décrites plus en détails.

Plus précisément, l'étape de répartition délivre deux vecteurs d'échantillons fréquentiels RF1 et RF2, comprenant chacun 32 échantillons fréquentiels (N7 à N38 pour RF1 et N27 à N58 pour RF2).

Au cours de l'étape suivante de transformation 13, on applique une fonction de transfert de type transformée en cosinus aux vecteurs d'échantillons fréquentiels RF1 et RF2, délivrant pour chaque vecteur d'échantillons fréquentiels une réponse partielle du canal dans le domaine transformé, notée respectivement RT1 et RT2. Par exemple, une telle fonction de transfert est de type DCT ou FDCT.

Dans ce cas, chaque réponse partielle comprend des échantillons représentatifs du canal dans le domaine transformé localisés dans un intervalle présentant une longueur inférieure ou égale (en nombre d'échantillons dans le domaine transformé) à 2CP/Δ.

Comme illustré en figure 5A, l'étape de transformation 13 met par exemple en oeuvre une multiplication de chacun des vecteurs d'échantillons fréquentiels par une matrice de transfert représentative d'une transformée en cosinus de type DCT ou FDCT de taille N/Δ x N/Δ. Les réponses partielles du canal dans le domaine transformé ainsi obtenues, RT1 et RT2, comprennent chacune N/Δ échantillons dans le domaine transformé, comprenant des échantillons représentatifs du canal dans le domaine transformé localisés dans l'intervalle 2CP/Δ et des échantillons représentatifs d'un bruit dans le domaine transformé dans l'intervalle (N-2CP)/Δ.

Lors de l'étape de transmission 14 d'un signal de retour, il n'est pas nécessaire de retourner à l'émetteur les échantillons représentatifs du bruit dans le domaine transformé. On transmet donc soit les 2CP/Δ premiers échantillons des différentes réponses partielles dans le domaine transformé (correspondant aux parties hachurées de la figure 5A), soit uniquement les échantillons représentatifs du canal dans le domaine transformé localisés dans l'intervalle 2CP/Δ.

Selon une variante, non illustré, l'étape de transformation 13 met en oeuvre une multiplication de chacun des vecteurs d'échantillons fréquentiels par une matrice de transfert de taille N/Δ x 2CP/Δ extraite d'une matrice représentative d'une transformée en cosinus de taille N/Δ x N/Δ dans laquelle on a conservé uniquement les 2CP/Δ premières colonnes. Les réponses partielles du canal dans le domaine transformé ainsi obtenues, RT1 et RT2, comprennent alors des échantillons représentatifs du canal dans le domaine transformé, localisés sur les 2CP/Δ premiers échantillons. A nouveau, on transmet à l'émetteur soit les 2CP/Δ échantillons dans le domaine transformé, soit uniquement les échantillons représentatifs du canal dans le domaine transformé localisés dans l'intervalle 2CP/Δ, des réponses partielles RT1 et RT2.

Comme illustré en figure 5B, côté émetteur, le signal de retour reçu (21) comprend au moins deux ensembles comprenant des échantillons représentatifs du canal dans le domaine transformé, associés chacun à une réponse partielle distincte. Chaque ensemble comprend 2CP/Δ échantillons dans le domaine transformé, ou uniquement les échantillons représentatifs du canal dans le domaine transformé localisés dans l'intervalle 2CP/Δ.

Ces ensembles sont alors transformés du domaine transformé vers le domaine fréquentiel, en utilisant une transformée inverse à celle mise en oeuvre côté récepteur (transformée en cosinus discrète inverse iDCT ou transformée en cosinus discrète rapide inverse iFDCT par exemple).

Plus précisément, selon l'exemple illustré en figure 5B, l'étape de transformation 22 met en oeuvre les étapes suivantes, pour au moins un des ensembles :

- construction d'un vecteur d'échantillons dans le domaine transformé de taille N/Δ, comprenant ledit ensemble (comprenant 2CP/Δ échantillons dans le domaine transformé, ou uniquement les échantillons représentatifs du canal dans le domaine transformé localisés dans l'intervalle 2CP/Δ) et des éléments nuls. En d'autres termes, on «complète» l'ensemble dans le domaine transformé pour obtenir un vecteur d'échantillons dans le domaine transformé comprenant N/Δ échantillons (32 selon l'exemple illustré), en ajoutant des éléments nuls après les 2CP/Δ échantillons dans le domaine transformé, ou après les échantillons représentatifs du canal dans le domaine transformé localisés dans l'intervalle 2CP/Δ ;
- multiplication par une matrice de transfert de taille N/Δx N/Δ (iDCT ou FiDCT), délivrant un vecteur d'échantillons fréquentiels de taille N/Δ.

On obtient de cette façon deux vecteurs d'échantillons fréquentiels $\widetilde{RF1}$ et $\widetilde{RF2}$ comprenant chacun N/Δ = 32 échantillons fréquentiels, correspondant aux vecteurs d'échantillons fréquentiels RF1 et RF2 obtenus côté récepteur.

Au cours de l'étape suivante de recombinaison 23, on recombine les vecteurs d'échantillons fréquentiels afin d'obtenir une information globale sur le canal dans le domaine fréquentiel, sur Np échantillons fréquentiels. Cette étape de recombinaison 23 est similaire à celle décrite en relation avec la figure 3B et le premier exemple. Par conséquent, elle n'est pas décrite plus en détail.

*2. Nmod. > Np*

Comme pour le premier exemple, on considère désormais que Np est inférieur à Nmod, comme illustré en figure 6.

A titre d'exemple, on considère à nouveau que N est égal à 64, Nmod est égal à 52 et le facteur de répétition des pilotes est égal à 1/2.

Les étapes d'estimation du canal 11 et de répartition 12 selon ce deuxième exemple sont similaires à celles décrites en relation avec la figure 4 et le premier exemple. Par conséquent, elles ne sont pas décrites plus en détails.

Plus précisément, l'étape de répartition 12 délivre un premier vecteur d'échantillons fréquentiels RF1 comprenant les échantillons correspondant aux positions des 16 premiers pilotes P dédiés à l'estimation du canal (correspondant aux positions présentant des indices impairs N7, N9, N11, ..., N35, N37), et un deuxième vecteur d'échantillons fréquentiels RF2 comprenant les 16 échantillons correspondant aux positions des 16 derniers pilotes P dédiés à l'estimation du canal (correspondant aux positions présentant des indices impairs N27, N29, N31, ... N55, N57).

Au cours d'une étape suivante de transformation 13, on applique une transformée en cosinus discret aux vecteurs d'échantillons fréquentiels RF1 et RF2, délivrant pour chaque vecteur d'échantillons fréquentiels une réponse partielle du canal dans le domaine transformé, notée respectivement RT1 et RT2. Par exemple, une telle transformée en cosinus discret est de type DCT ou FDCT.

Dans ce cas, chaque réponse partielle comprend des échantillons représentatifs du canal localisés dans le domaine transformé dans un intervalle présentant une longueur inférieure ou égale (en nombre d'échantillons dans le domaine transformé) à $2CP/\Delta$.

Comme illustré en figure 6, l'étape de transformation 13 met par exemple en oeuvre une multiplication de chacun des vecteurs d'échantillons fréquentiels par une matrice de transfert représentative d'une transformée en cosinus de taille $\dfrac{N/\delta}{\Delta} \times \dfrac{N/\delta}{\Delta}$. Les réponses partielles du canal dans le domaine transformé ainsi obtenues, RT1 et RT2, comprennent chacune $\dfrac{N/\delta}{\Delta}$ échantillons dans le domaine transformé, comprenant des échantillons représentatifs du canal dans le domaine transformé localisés dans l'intervalle $2CP/\Delta$ et des échantillons représentatifs d'un bruit dans le domaine transformé dans l'intervalle $\dfrac{N/\delta - 2CP}{\Delta}$.

Lors de l'étape de transmission 14 d'un signal de retour, il n'est pas nécessaire de retourner à l'émetteur les échantillons représentatifs du bruit dans le domaine transformé. On transmet donc soit les $2CP/\Delta$ premiers échantillons des différentes réponses partielles dans le domaine transformé (correspondant aux parties hachurées de la figure 6), soit uniquement les échantillons représentatifs du canal dans le domaine transformé localisés dans l'intervalle $2CP/\Delta$.

Selon une variante, non illustrée, l'étape de transformation 13 met en oeuvre une multiplication de chacun des vecteurs d'échantillons fréquentiels par une matrice de transfert de taille $\dfrac{N/\delta}{\Delta} \times \dfrac{2CP}{\Delta}$ extraite d'une matrice représentative d'une transformée en cosinus de taille $\dfrac{N/\delta}{\Delta} \times \dfrac{N/\delta}{\Delta}$ dans laquelle on a conservé uniquement les $2CP/\Delta$ premières colonnes. Les réponses partielles du canal dans le domaine transformé ainsi obtenues, RT1 et RT2, comprennent alors des échantillons représentatifs du canal dans le domaine transformé, localisés sur les $2CP/\Delta$ premiers échantillons. A nouveau, on transmet à l'émetteur soit les $2CP/\Delta$ échantillons dans le domaine transformé, soit uniquement les échantillons représentatifs du canal dans le domaine transformé localisés dans l'intervalle $2CP/\Delta$, des réponses partielles RT1 et RT2.

Les opérations mises en oeuvre côté émetteur sont identiques à celles mises en oeuvre pour le cas Np égal à Nmod, avec des tailles de matrices et de vecteurs d'échantillons dans le domaine transformé et/ou dans le domaine fréquentiel similaires. Elles ne sont donc pas décrites de nouveau dans ce cas où Np est inférieur à Nmod.

*5.4 Optimisation des fonctions de transfert*

On décrit ci-après autres deux exemples de réalisation de l'invention, mettant en oeuvre d'une part une transformée de Fourier optimisée et d'autre part une transformée de type DCT optimisée, lors des étapes de transformation entre le domaine fréquentiel et un domaine transformé.

En effet, dans certains cas, l'application directe d'une fonction de transfert classique (transformée de Fourier, DCT, DST, etc) à une sous-bande du canal ne permet pas de localiser les échantillons représentatifs du canal dans le domaine transformé des différentes réponses partielles dans un intervalle présentant une longueur inférieure ou égale à $CP/\Delta$ ou $2CP/\Delta$. En d'autres termes, il arrive que l'étape de transformation 13 délivre des réponses partielles comprenant des échantillons représentatifs du canal dans le domaine transformé mélangés avec des échantillons représentatifs d'un bruit dans le domaine transformé.

Ceci peut être dû à la présence de porteuses nulles en bordure et/ou au milieu du spectre du signal multiporteuse, insérée notamment pour éviter un recouvrement spectral avec d'autres applications utilisant des bandes de fréquence voisines. L'existence de ces porteuses nulles crée en effet des effets de bords sur la réponse du canal (en anglais « aliasing »), qui devient très dispersif dans le domaine transformé, et donc difficile à localiser.

Dans cette situation, il peut être nécessaire de déterminer une matrice de transfert spécifique, permettant de s'affranchir des porteuses modulées par une valeur nulle localisées aux bords et/ou au centre du spectre du signal multiporteuse et/ou des porteuses modulées par des données utiles et/ou des porteuses modulées par des pilotes dédiés à l'estimation d'un autre canal de transmission, si de telles porteuses existent.

Une telle matrice de transfert spécifique permet, lors de l'étape de transformation 13, de concentrer les échantillons représentatifs du canal dans le domaine transformé sur les CP/$\Delta$ ou 2CP/$\Delta$ premiers échantillons de la réponse du canal dans le domaine transformé.

Les demandes de brevet français FR 1053696 déposée le 11 mai 2010 et FR 1058431 déposée le 15 octobre 2010, décrivent plus précisément cette technique de construction d'une matrice de transfert spécifique.

*A) Transformation mettant en oeuvre une transformée de Fourier optimisée*

On présente en relation avec les figures 6 et 7 un troisième exemple de mise en oeuvre de l'invention, basé sur l'utilisation d'une matrice de transfert spécifique construite à partir d'une matrice de Fourier.

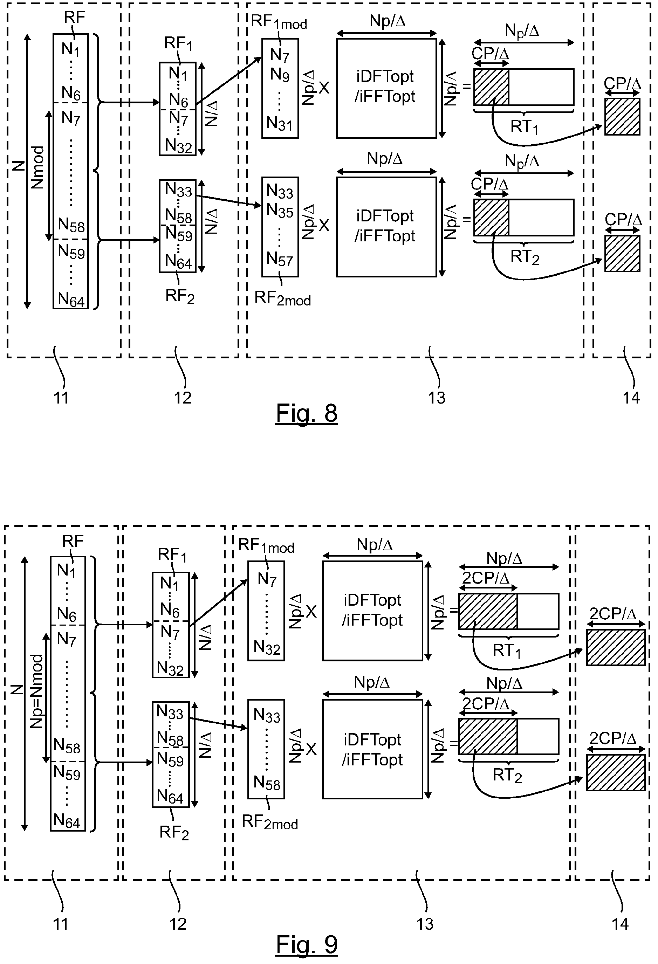

Comme pour les premier et deuxième exemples, on distingue deux cas : le cas où Np est égal à Nmod (illustré en figure 7) et le cas où Np est inférieur à Nmod (illustré en figure 8).

*1. Np = Nmod*

On considère à nouveau, à titre d'exemple, que N est égal à 64 et Nmod est égal à 52.

Comme illustré en figure 7, côté récepteur, la réponse fréquentielle RF du canal de transmission obtenue à l'issue de l'étape d'estimation 11 comprend, sous sa forme échantillonnée, N échantillons fréquentiels, notés N1, N2, ..., N64.

Selon ce troisième exemple de réalisation, l'étape de répartition 12 répartit dans des vecteurs d'échantillons fréquentiels l'ensemble des N échantillons fréquentiels N1, N2, ..., N64, qui correspondent donc aux positions de porteuses modulées par une valeur nulle (N-Nmod=12, correspondant aux échantillons fréquentiels N1 à N6 et N59 à N64) ou une valeur non nulle (Nmod=52, correspondant aux échantillons fréquentiels N7 à N58) d'un symbole multiporteuse. On obtient, selon ce mode de réalisation, $\Delta$ vecteurs d'échantillons fréquentiels, comprenant chacun N/$\Delta$ échantillons fréquentiels. Ainsi, contrairement aux deux premiers exemples de réalisation basés sur l'utilisation d'une fonction de transfert « classique », les différents vecteurs d'échantillons fréquentiels selon ce troisième exemple ne se chevauchent pas.

Selon l'exemple illustré en figure 7, $\Delta$ est égal à 2. Chaque vecteur d'échantillons fréquentiels comprend alors N/$\Delta$ = 32 échantillons fréquentiels, le premier vecteur d'échantillons fréquentiels RF1 comprenant les échantillons correspondant aux positions des 32 premières porteuses modulées par une valeur nulle ou non nulle (correspondant aux positions N1 à $N_{N/2}$, soit N1 à N32) et le deuxième vecteur d'échantillons fréquentiels RF2 comprenant les échantillons correspondant aux positions des 32 dernières porteuses modulées par une valeur nulle ou non nulle (correspondant aux positions $N_{N/2+1}$ à $N_N$, soit N33 à N64). Les deux vecteurs d'échantillons fréquentiels RF1 et RF2 ne se chevauchent donc pas.

Préalablement à l'étape de transformation 13, les deux vecteurs d'échantillons fréquentiels sont modifiés, afin de supprimer les échantillons fréquentiels correspondant aux positions des porteuses nulles.

On obtient ainsi un premier vecteur modifié, noté RF1mod, comprenant uniquement les échantillons fréquentiels N7 à N32, et un deuxième vecteur modifié, noté RF2mod, comprenant uniquement les échantillons fréquentiels N33 à N58. Les vecteurs modifiés comprennent donc uniquement les échantillons fréquentiels correspondant aux positions des porteuses modulées par des pilotes dédiés à l'estimation du canal de transmission.

Au cours d'une étape suivante de transformation 13, on applique une fonction de transfert optimisée aux vecteurs modifiés RF1mod et RF2mod, délivrant pour chaque vecteur modifié une réponse partielle du canal dans le domaine temporel, notée respectivement RT1 et RT2. Chaque réponse partielle obtenue comprend alors des échantillons temporels représentatifs du canal localisés dans un intervalle présentant une longueur inférieure ou égale (en nombre d'échantillons temporels) à CP/$\Delta$.

Comme illustré en figure 7, l'étape de transformation 13 met par exemple en oeuvre une multiplication des vecteurs modifiés par des matrices de transfert spécifiques, construites en tenant compte des positions des porteuses modulées par des pilotes dédiés à l'estimation du canal de transmission. En d'autres termes, cette matrice de transfert spécifique permet de s'affranchir des porteuses modulées par une valeur nulle localisées aux bords et/ou au centre du spectre du signal multiporteuse et/ou des porteuses modulées par des données utiles et/ou des porteuses modulées par des pilotes dédiés à l'estimation d'un autre canal de transmission, si de telles porteuses existent. Les matrices de transfert utilisées pour transformer les différents vecteurs modifiés ne sont donc pas nécessairement identiques.

Plus précisément, la construction d'une matrice de transfert spécifique met en oeuvre les sous-étapes suivantes :

- obtention d'une matrice réduite, extraite d'une matrice de Fourier taille N/Δ x N/Δ dans laquelle on a conservé les éléments correspondant à la position des porteuses modulées par des pilotes dédiés à l'estimation du canal de transmission du symbole pilote ;
- décomposition de la matrice réduite en valeurs propres ;
- détermination de la matrice de transfert, à partir d'un ensemble de valeurs propres choisies parmi les valeurs propres.

Selon l'exemple illustré en figure 7, la matrice réduite utilisée pour construire la matrice de transfert permettant de convertir le premier vecteur modifié RF1mod du domaine fréquentiel vers le domaine temporel, notée $F_{Np/\Delta}^1$, est obtenue en supprimant les six premières lignes d'une matrice de Fourier de taille $(N/\Delta \times N/\Delta) = (32 \times 32)$, correspondant aux positions des porteuses nulles (correspondant aux échantillons fréquentiels N1 à N6). La matrice réduite utilisée pour construire la matrice de transfert permettant de convertir le deuxième vecteur modifié RF2mod du domaine fréquentiel vers le domaine temporel, notée $F_{Np/\Delta}^2$, est obtenue en supprimant les six dernières lignes d'une matrice de Fourier de taille $(N/\Delta \times N/\Delta) = (32 \times 32)$, correspondant aux positions des porteuses nulles (correspondant aux échantillons fréquentiels N59 à N64).

Les matrices réduites obtenues sont de taille $(Np/\Delta \times N/\Delta) = (26 \times 32)$.

Les différentes matrices réduites $F_{Np/\Delta}^1$ et $F_{Np/\Delta}^2$ sont décomposées en valeurs propres, et on détermine, pour chaque vecteur modifié, une matrice de transfert distincte à partir d'un ensemble de valeurs propres choisies parmi les valeurs propres obtenues pour les matrices réduites $F_{Np/\Delta}^1$ et $F_{Np/\Delta}^2$, comme décrit dans les demandes de brevet français FR 1053696 déposée le 11 mai 2010 et FR 1058431 déposée le 15 octobre 2010. Les matrices de transfert obtenues présentent une taille $(Np/\Delta \times Np/\Delta)$.

On rappelle que la technique de construction d'une matrice de transfert décrite dans les demandes de brevet précitées permettait de déterminer une matrice de transfert « globale », permettant de transformer la réponse « globale » du canal du domaine fréquentiel vers un domaine transformé.

Ici, comme on travaille sur des réponses partielles (sous-bandes du canal), on détermine plusieurs matrices de transfert « partielles », permettant chacune de transformer une partie de la réponse du canal du domaine fréquentiel vers un domaine transformé. On travaille donc « bloc par bloc », et toutes les tailles de matrices sont divisées par le nombre de vecteurs d'échantillons fréquentiels par rapport aux demandes de brevet précitées.

Les réponses partielles du canal dans le domaine temporel, obtenues après multiplication du premier vecteur modifié RF1mod par la matrice de transfert obtenue à partir de la matrice réduite $F_{Np/\Delta}^1$ et multiplication du deuxième vecteur modifié RF2mod par la matrice de transfert obtenue à partir de la matrice réduite $F_{Np/\Delta}^2$, comprennent chacune Np/Δ échantillons temporels, comprenant des échantillons temporels représentatifs du canal localisés dans l'intervalle CP/Δ et des échantillons temporels représentatifs d'un bruit dans l'intervalle (Np-CP)/Δ, avec Np > CP.

Comme pour les premier et deuxième exemples, lors de l'étape de transmission 14 d'un signal de retour, il n'est pas nécessaire de retourner à l'émetteur les échantillons temporels représentatifs du bruit. On transmet donc soit les CP/Δ premiers échantillons temporels des différentes réponses partielles (correspondant aux parties hachurées de la figure 7), soit uniquement les échantillons temporels représentatifs du canal localisés dans l'intervalle CP/Δ.

Selon une variante, non illustrée, l'étape de transformation 13 met en oeuvre une multiplication des vecteurs modifiés par des matrices de transfert obtenues chacune à partir d'une matrice réduite elle-même obtenue en supprimant les lignes d'une matrice de Fourier de taille $(N/\Delta \times N/\Delta) = (32 \times 32)$ correspondant aux positions des porteuses nulles, et en conservant uniquement les CP/Δ premières colonnes. Les matrices réduites ainsi obtenues, notées $F_{CP/\Delta}^1$ et $F_{CP/\Delta}^2$, présentent donc une taille $(Np/\Delta \times CP/\Delta)$. Les réponses partielles du canal dans le domaine temporel obtenues, RT1 et RT2, comprennent des échantillons temporels représentatifs du canal, localisés sur les CP/Δ premiers échantillons. A nouveau, on transmet à l'émetteur soit les CP/Δ échantillons temporels, soit uniquement les échantillons temporels représentatifs du canal localisés dans l'intervalle CP/Δ, des réponses partielles RT1 et RT2.

Les opérations mises en oeuvre côté émetteur sont identiques à celles décrites pour le premier exemple, en relation avec la figure 3B. Elles ne sont donc pas décrites de nouveau.

*2. Nmod > Np*

On considère désormais que Nmod est supérieur à Np, comme illustré en figure 8. Par exemple, les pilotes dédiés à l'estimation du canal de transmission sont répartis dans un symbole pilote selon un motif régulier.

On considère à nouveau, à titre d'exemple, que N est égal à 64, Nmod est égal à 52 et le facteur de répétition des pilotes est égal à 1/2. On a donc Np égal à 26. Selon cet exemple, un symbole pilote comprend une alternance de pilotes dédiés à l'estimation du canal de transmission, notés P, et de données utiles ou pilotes dédiés à l'estimation d'un autre canal de transmission, notés D.

Comme illustré en figure 8, côté récepteur, la réponse fréquentielle RF du canal de transmission obtenue à l'issue de l'étape d'estimation 11 comprend, sous sa forme échantillonnée, N échantillons fréquentiels, notés N1, N2, ..., N64.

Parmi ces N = 64 échantillons fréquentiels, les six premiers (N1 à N6) et six derniers (N59 à N64) correspondent à des positions de porteuses modulées par une valeur nulle d'un symbole multiporteuse du signal. Les Nmod = 52 échantillons restants correspondent à des positions de porteuses modulées par une valeur non nulle du symbole multiporteuse (P ou D). Par exemple, parmi ces 52 échantillons fréquentiels restants, les échantillons fréquentiels présentant un indice impair (N7, N9, N11, .., N57) correspondent à des pilotes P, et les échantillons fréquentiels présentant un indice pair (N8, N10, N12, .., N58) correspondent à des données utiles D.

Selon ce troisième exemple de réalisation, comme décrit pour le cas Nmod = Np, l'étape de répartition 12 répartit dans des vecteurs d'échantillons fréquentiels l'ensemble des N échantillons fréquentiels N1, N2, ..., N64. On obtient ainsi $\Delta$ vecteurs d'échantillons fréquentiels, comprenant chacun N/$\Delta$ échantillons fréquentiels, ne se chevauchant pas. Plus précisément, l'étape de répartition délivre deux vecteurs d'échantillons fréquentiels RF1 et RF2, comprenant chacun 32 échantillons fréquentiels (N1 à N32 pour RF1 et N33 à N64 pour RF2).

Préalablement à l'étape de transformation 13, les deux vecteurs d'échantillons fréquentiels sont modifiés, afin de supprimer les échantillons fréquentiels correspondant aux positions des porteuses nulles, des données utiles, et des pilotes dédiés à l'estimation d'un autre canal de transmission.

On obtient ainsi un premier vecteur modifié, noté RF1mod, comprenant uniquement les échantillons fréquentiels d'indice impair N7 à N31, et un deuxième vecteur modifié, noté RF2mod, comprenant uniquement les échantillons fréquentiels d'indice impair N33 à N57. Les vecteurs modifiés comprennent donc uniquement les échantillons fréquentiels correspondant aux positions des porteuses modulées par des pilotes dédiés à l'estimation du canal de transmission.

Au cours d'une étape suivante de transformation 13, on applique une fonction de transfert optimisée aux vecteurs modifiés RF1mod et RF2mod, délivrant pour chaque vecteur modifié une réponse partielle du canal dans le domaine temporel, notée respectivement RT1 et RT2. Chaque réponse partielle obtenue comprend alors des échantillons temporels représentatifs du canal localisés dans un intervalle présentant une longueur inférieure ou égale à CP/$\Delta$.

Comme illustré en figure 8, l'étape de transformation 13 met par exemple en oeuvre une multiplication de chacun des vecteurs modifié par une matrice de transfert spécifique, construite comme décrit ci-dessus pour le cas Nmod = Np selon ce troisième exemple.

Plus précisément, la matrice réduite utilisée pour construire la matrice de transfert permettant de convertir le premier vecteur modifié RF1mod du domaine fréquentiel vers le domaine temporel, notée $F_{Np/\Delta}^{1}$, est obtenue en supprimant les six premières lignes et les lignes d'indice pair d'une matrice de Fourier de taille ($N / \Delta$ x $N / \Delta$) = (32 x 32), correspondant aux positions des porteuses nulles (correspondant aux échantillons fréquentiels N1 à N6) et des porteuses modulées par des donnés utiles ou des pilotes dédiés à l'estimation d'un autre canal (correspondant aux échantillons fréquentiels d'indice pair N6, N8, ..., N30, N32). La matrice réduite utilisée pour construire la matrice de transfert permettant de convertir le deuxième vecteur modifié RF2mod du domaine fréquentiel vers le domaine temporel, notée $F_{Np/\Delta}^{2}$, est obtenue en supprimant les lignes d'indice pair et les six dernières lignes d'une matrice de Fourier de taille *($N / \Delta$ x $N / \Delta$)* = (32 x 32), correspondant aux positions des porteuses nulles (correspondant aux échantillons fréquentiels N59 à N64) et des porteuses modulées par des donnés utiles ou des pilotes dédiés à l'estimation d'un autre canal (correspondant aux échantillons fréquentiels d'indice pair N34, N36, ..N58).

Les différentes matrices réduites $F_{Np/\Delta}^{1}$ et $F_{Np/\Delta}^{2}$ sont décomposées en valeurs propres, et on détermine, pour chaque vecteur modifié, une matrice de transfert distincte à partir d'un ensemble de valeurs propres choisies parmi les valeurs propres obtenues pour les matrices réduites $F_{Np/\Delta}^{1}$ et $F_{Np/\Delta}^{2}$

Les réponses partielles du canal dans le domaine temporel, obtenues après multiplication du premier vecteur modifié RF1mod par la matrice de transfert obtenue à partir de la matrice réduite $F_{Np/\Delta}^{1}$ et multiplication du deuxième vecteur modifié RF2mod par la matrice de transfert obtenue à partir de la matrice réduite $F_{Np/\Delta}^{2}$ comprennent chacune

Np/$\Delta$ échantillons temporels, comprenant des échantillons temporels représentatifs du canal localisés dans l'intervalle CP/$\Delta$ et des échantillons temporels représentatifs d'un bruit dans l'intervalle (Np-CP)/$\Delta$, avec Np > CP.

Comme pour le cas Np = Nmod selon ce troisième exemple, on transmet lors de l'étape de transmission 14 d'un signal de retour soit les CP/$\Delta$ premiers échantillons temporels des différentes réponses partielles (correspondant aux parties hachurées de la figure 8), soit uniquement les échantillons temporels représentatifs du canal localisés dans l'intervalle CP/$\Delta$.

Selon une variante, non illustrée, l'étape de transformation 13 met en oeuvre une multiplication des vecteurs modifiés par des matrices de transfert obtenues chacune à partir d'une matrice réduite elle-même obtenue en supprimant les lignes d'une matrice de Fourier de taille ($N / \Delta \times N / \Delta$) = (32 x 32) correspondant aux positions des porteuses nulles, des donnés utiles, et des pilotes dédiés à l'estimation d'un autre canal, et en conservant uniquement les CP/$\Delta$ premières

colonnes. Les matrices réduites ainsi obtenues, notées $F_{CP/\Delta}^{1}$ et $F_{CP/\Delta}^{2}$, présentent donc une taille *(Np / $\Delta$ x CP /*

$\Delta$). Comme pour le cas Np = Nmod, les réponses partielles du canal dans le domaine temporel ainsi obtenues, RT1 et RT2, comprennent des échantillons temporels représentatifs du canal localisés dans les CP/$\Delta$ premiers échantillons temporels.

Les opérations mises en oeuvre côté émetteur sont identiques à celles décrites pour le premier exemple, en relation avec la figure 3B. Elles ne sont donc pas décrites de nouveau.

*B) Transformation mettant en oeuvre une transformée de type DCT optimisée*

On présente en relation avec la figure 8 un quatrième exemple de mise en oeuvre de l'invention, basé sur l'utilisation d'une matrice de transfert spécifique construite à partir d'une matrice représentative d'une transformée en cosinus.

Comme pour les trois exemples précédents, on distingue deux cas : le cas où Nmod est égal à Np (illustré en figure 8) et le cas où Np est inférieur à Nmod.

*1. Np = Nmod*

On considère également, selon ce quatrième exemple, que N est égal à 64, Nmod est égal à 52 et $\Delta$ est égal à 2.

Les étapes d'estimation du canal 11 et de répartition 12 selon ce quatrième exemple sont similaires à celles décrites en relation avec la figure 7 et le troisième exemple. Par conséquent, elles ne sont pas décrites plus en détail.

Plus précisément, l'étape de répartition délivre deux vecteurs d'échantillons fréquentiels RF1 et RF2, comprenant chacun 32 échantillons fréquentiels (N1 à N32 pour RF1 et N33 à N64 pour RF2).

Comme présenté en relation avec le troisième exemple, préalablement à l'étape de transformation 13, les deux vecteurs d'échantillons fréquentiels sont modifiés, afin de supprimer les échantillons fréquentiels correspondant aux positions des porteuses nulles. On obtient ainsi un premier vecteur modifié, noté RF1mod, comprenant uniquement les échantillons fréquentiels N7 à N32, et un deuxième vecteur modifié, noté RF2mod, comprenant uniquement les échantillons fréquentiels N33 à N58. Les vecteurs modifiés comprennent donc uniquement les échantillons fréquentiels correspondant aux positions des porteuses modulées par des pilotes dédiés à l'estimation du canal de transmission.

Au cours d'une étape suivante de transformation 13, on applique une fonction de transfert optimisée à chaque vecteur modifié RF1mod et RF2mod, délivrant pour chaque vecteur modifié une réponse partielle du canal dans le domaine transformé, notée respectivement RT1 et RT2. Chaque réponse partielle obtenue comprend alors des échantillons représentatifs du canal dans le domaine transformé localisés dans un intervalle présentant une longueur inférieure ou égale (en nombre d'échantillons dans le domaine transformé) à 2CP/$\Delta$.

Comme illustré en figure 9, l'étape de transformation 13 met par exemple en oeuvre une multiplication des vecteurs modifiés par des matrices de transfert spécifiques, construites en tenant compte des positions des porteuses modulées par des pilotes dédiés à l'estimation du canal de transmission.

Plus précisément, la construction d'une matrice de transfert spécifique met en oeuvre les sous-étapes suivantes :

- obtention d'une matrice réduite, extraite d'une matrice représentative d'une transformée en cosinus de taille N/$\Delta$ x N/$\Delta$ dans laquelle on a conservé les éléments correspondant à la position des porteuses modulées par des pilotes dédiés à l'estimation du canal de transmission du symbole pilote ;

- décomposition de la matrice réduite en valeurs propres ;
- détermination de la matrice de transfert, à partir d'un ensemble de valeurs propres choisies parmi les valeurs propres.

Selon l'exemple illustré en figure 9, la matrice réduite utilisée pour construire la matrice de transfert permettant de convertir le premier vecteur modifié RF1mod du domaine fréquentiel vers le domaine transformé, notée $F_{Np/\Delta}^1$, est obtenue en supprimant les six premières lignes d'une matrice représentative d'une transformée en cosinus de taille $(N/\Delta \times N/\Delta) = (32 \times 32)$, correspondant aux positions des porteuses nulles (correspondant aux échantillons fréquentiels N1 à N6). La matrice réduite utilisée pour construire la matrice de transfert permettant de convertir le deuxième vecteur modifié RF2mod du domaine fréquentiel vers le domaine transformé, notée $F_{Np/\Delta}^2$, est obtenue en supprimant les six dernières lignes d'une matrice représentative d'une transformée en cosinus de taille $(N/\Delta \times N/\Delta) = (32 \times 32)$, correspondant aux positions des porteuses nulles (correspondant aux échantillons fréquentiels N59 à N64). Les matrices réduites sont donc de taille $(Np/\Delta \times N/\Delta) = (26 \times 32)$.

Les différentes matrices réduites $F_{Np/\Delta}^1$ et $F_{Np/\Delta}^2$ sont décomposées en valeurs propres, et on détermine, pour chaque vecteur modifié, une matrice de transfert distincte à partir d'un ensemble de valeurs propres choisies parmi les valeurs propres obtenues pour les matrices réduites $F_{Np/\Delta}^1$ et $F_{Np/\Delta}^2$.

Les réponses partielles du canal dans le domaine transformé, obtenues après multiplication du premier vecteur modifié RF1mod par la matrice de transfert obtenue à partir de la matrice réduite $F_{Np/\Delta}^1$ et multiplication du deuxième vecteur modifié RF2mod par la matrice de transfert obtenue à partir de la matrice réduite $F_{Np/\Delta}^2$ comprennent chacune $Np/\Delta$ échantillons dans le domaine transformé, comprenant des échantillons représentatifs du canal dans le domaine transformé localisés dans l'intervalle $2CP/\Delta$ et des échantillons représentatifs d'un bruit dans le domaine transformé dans l'intervalle $(Np-2CP)/\Delta$, avec $Np > 2CP$.

Comme pour les trois exemples précédents, lors de l'étape de transmission 14 d'un signal de retour, il n'est pas nécessaire de retourner à l'émetteur les échantillons représentatifs du bruit dans le domaine transformé. On transmet donc soit les $2CP/\Delta$ premiers échantillons des différentes réponses partielles dans le domaine transformé (correspondant aux parties hachurées de la figure 9), soit uniquement les échantillons représentatifs du canal dans le domaine transformé localisés dans l'intervalle $2CP/\Delta$.

Selon une variante, non illustrée, l'étape de transformation 13 met en oeuvre une multiplication des vecteurs modifiés par des matrices de transfert obtenues chacune à partir d'une matrice réduite obtenue en supprimant les lignes d'une matrice représentative d'une transformée en cosinus de taille $(N/\Delta \times N/\Delta) = (32 \times 32)$ correspondant aux positions des porteuses nulles, et en conservant uniquement les $2CP/\Delta$ premières colonnes. Les matrices réduites ainsi obtenues, notées $F_{2CP/\Delta}^1$ et $F_{2CP/\Delta}^2$, présentent donc une taille $(Np/\Delta \times 2CP/\Delta)$. Les réponses partielles du canal dans le domaine transformé ainsi obtenues, RT1 et RT2, comprennent alors des échantillons représentatifs du canal dans le domaine transformé, localisés sur les $2CP/\Delta$ premiers échantillons dans le domaine transformé. A nouveau, on transmet à l'émetteur soit les $2CP/\Delta$ échantillons dans le domaine transformé, soit uniquement les échantillons représentatifs du canal dans le domaine transformé localisés dans l'intervalle $2CP/\Delta$, des réponses partielles RT1 et RT2.

Les opérations mises en oeuvre côté émetteur sont identiques à celles décrites pour le deuxième exemple, en relation avec la figure 5B. Elles ne sont donc pas décrites de nouveau.

*2. Np < Nmod*

On considère désormais que Nmod est inférieur à Np. On considère également à nouveau, à titre d'exemple, que N est égal à 64, Nmod est égal à 52 et le facteur de répétition des pilotes est égal à 1/2. On a donc Np égal à 26.

Les étapes d'estimation du canal 11 et de répartition 12 selon ce quatrième exemple sont similaires à celles décrites en relation avec la figure 8 et le troisième exemple. Par conséquent, elles ne sont pas décrites plus en détail.

Plus précisément, l'étape de répartition délivre deux vecteurs d'échantillons fréquentiels RF1 et RF2, comprenant chacun 32 échantillons fréquentiels (N1 à N32 pour RF1 et N33 à N64 pour RF2).

Préalablement à l'étape de transformation 13, les deux vecteurs d'échantillons fréquentiels sont modifiés, afin de supprimer les échantillons fréquentiels correspondant aux positions des porteuses nulles, des données utiles, et des pilotes dédiés à l'estimation d'un autre canal de transmission.

Comme décrit en relation avec la figure 8 et le troisième exemple, on obtient ainsi un premier vecteur modifié, noté RF1mod, comprenant uniquement les échantillons fréquentiels d'indice impair N7 à N31, et un deuxième vecteur modifié, noté RF2mod, comprenant uniquement les échantillons fréquentiels d'indice impair N33 à N57.

Au cours d'une étape suivante de transformation 13, on applique une fonction de transfert optimisée à chaque vecteur modifié RF1mod et RF2mod, délivrant pour chaque vecteur modifié une réponse partielle du canal dans le domaine transformé, notée respectivement RT1 et RT2. Chaque réponse partielle obtenue comprend alors des échantillons représentatifs du canal dans le domaine transformé localisés dans un intervalle présentant une longueur inférieure ou égale (en nombre d'échantillons dans le domaine transformé) à 2CP/Δ.

Comme illustré en figure 9, l'étape de transformation 13 met par exemple en oeuvre une multiplication de chacun des vecteurs modifié par une matrice de transfert spécifique, construite comme décrit ci-dessus pour le cas Nmod = Np selon ce quatrième exemple.

Plus précisément, la matrice réduite utilisée pour construire la matrice de transfert permettant de convertir le premier vecteur modifié RF1mod du domaine fréquentiel vers le domaine transformé, notée $F_{Np/\Delta}^{1}$, est obtenue en supprimant les six premières lignes et les lignes d'indice pair d'une matrice représentative d'une transformée en cosinus de taille ($N/\Delta \times N/\Delta$)=(32×32), correspondant aux positions des porteuses nulles (correspondant aux échantillons fréquentiels N1 à N6) et des porteuses modulées par des donnés utiles ou des pilotes dédiés à l'estimation d'un autre canal (correspondant aux échantillons fréquentiels d'indice pair N6, N8, ..., N30, N32). La matrice réduite utilisée pour construire la matrice de transfert permettant de convertir le deuxième vecteur modifié RF2mod du domaine fréquentiel vers le domaine transformé, notée $F_{Np/\Delta}^{2}$, est obtenue en supprimant les lignes d'indice pair et les six dernières lignes d'une matrice représentative d'une transformée en cosinus de taille ($N/\Delta \times N/\Delta$)=(32×32), correspondant aux positions des porteuses nulles (correspondant aux échantillons fréquentiels N59 à N64) et des porteuses modulées par des donnés utiles ou des pilotes dédiés à l'estimation d'un autre canal (correspondant aux échantillons fréquentiels d'indice pair N34, N36, ..., N58). Les matrices réduites présentent une taille ($Np/\Delta \times N/\Delta$)=(13×32)*.*

Les différentes matrices réduites $F_{Np/\Delta}^{1}$ et $F_{Np/\Delta}^{2}$ sont décomposées en valeurs propres, et on détermine, pour chaque vecteur modifié, une matrice de transfert distincte à partir d'un ensemble de valeurs propres choisies parmi les valeurs propres obtenues pour les matrices réduites $F_{Np/\Delta}^{1}$ et $F_{Np/\Delta}^{2}$.

Les réponses partielles du canal dans le domaine transformé, obtenues après multiplication du premier vecteur modifié RF1mod par la matrice de transfert obtenue à partir de la matrice réduite $F_{Np/\Delta}^{1}$ et multiplication du deuxième vecteur modifié RF2mod par la matrice de transfert obtenue à partir de la matrice réduite $F_{Np/\Delta}^{2}$ comprennent chacune Np/Δ échantillons dans le domaine transformé, comprenant des échantillons représentatifs du canal dans le domaine transformé localisés dans l'intervalle 2CP/Δ et des échantillons représentatifs d'un bruit dans le domaine transformé dans l'intervalle (Np-2CP)/Δ, avec Np >2CP.

Comme pour le cas Np = Nmod selon ce quatrième exemple, on transmet lors de l'étape de transmission 14 d'un signal de retour soit les 2CP/Δ premiers échantillons des différentes réponses partielles dans le domaine transformé (correspondant aux parties hachurées de la figure 9), soit uniquement les échantillons représentatifs du canal dans le domaine transformé localisés dans l'intervalle 2CP/Δ.

Selon une variante, non illustrée, l'étape de transformation 13 met en oeuvre une multiplication des vecteurs modifiés par des matrices de transfert obtenues chacune à partir d'une matrice réduite elle-même obtenue en supprimant les lignes d'une matrice représentative d'une transformée en cosinus de taille ($N/\Delta \times N/\Delta$)=(32×32), correspondant aux positions des porteuses nulles, des donnés utiles, et des pilotes dédiés à l'estimation d'un autre canal, et en conservant uniquement les CP/Δ premières colonnes. Les matrices réduites ainsi obtenues, notées $F_{CP/\Delta}^{1}$ et $F_{CP/\Delta}^{2}$, présentent donc une taille ($Np/\Delta \times CP/\Delta$). Comme pour le cas Np = Nmod, les réponses partielles du canal dans le domaine transformé ainsi obtenues, RT1 et RT2, comprennent alors des échantillons représentatifs du canal dans le domaine transformé, localisés sur les 2CP/Δ premiers échantillons.

Les opérations mises en oeuvre côté émetteur sont identiques à celles décrites pour le deuxième exemple, en relation avec la figure 5B. Elles ne sont donc pas décrites de nouveau.

*5.5 Autres modes de réalisation*

Dans les quatre exemples présentés ci-dessus, on a considéré des fonctions de transfert de type transformée de Fourier ou transformée en cosinus. Bien entendu, d'autres fonctions de transfert sont envisageables, comme les transformées en sinus ou en ondelettes, sous leur forme classique ou optimisée.

Par ailleurs, dans les quatre exemples décrits ci-dessus, on a considéré un nombre N de porteuses d'un symbole multiporteuse égal à 64. L'invention ne se limite bien entendu pas à cette valeur, et N peut être égal à 128, 256, etc, selon le type de modulation mis en oeuvre. Dans le cas où N est égal à 128, Nmod est égal à 108 ; dans le cas où N est égal à 256, Nmod est égal à 234, etc.

De même, le nombre de vecteurs d'échantillons temporels obtenus lors de l'étape de répartition n'est pas nécessairement égal à 2. Préférentiellement, il s'agit d'une puissance de 2. Ainsi, $\Delta$ peut être égal à 4, 8, 16, etc.

Si l'on utilise une fonction de transfert « classique » (premier et deuxième exemples), les vecteurs d'échantillons se chevauchent, puisqu'on répartit Np (respectivement Np/$\delta$ si $\delta$ est différent de 1) échantillons fréquentiels dans $\Delta$ vecteurs d'échantillons fréquentiels de taille N/$\Delta$ (respectivement de taille N/$\delta$/$\Delta$).

Ainsi, si $\Delta$ = 4, N = 64, et Np =52, le premier vecteur d'échantillons fréquentiels comprend les échantillons N7 à N22, le deuxième vecteur d'échantillons fréquentiels comprend les échantillons N19 à N34, le troisième vecteur d'échantillons fréquentiels comprend les échantillons N31 à N46, et le quatrième vecteur d'échantillons fréquentiels comprend les échantillons N43 à N58. Les différents vecteurs d'échantillons fréquentiels se « recoupent » donc sur

$$\frac{N - Np}{\Delta - 1} = 4$$ échantillons fréquentiels (échantillons N19 à N22 entre les premier et deuxième vecteurs d'échantillons fréquentiels, échantillons N31 à N34 entre les deuxième et troisième vecteurs d'échantillons fréquentiels, et échantillons N43 à N46 entre les troisième et quatrième vecteurs d'échantillons fréquentiels).

Ainsi, d'une manière générale, on peut définir les échantillons compris dans un vecteur d'échantillons fréquentiels, ainsi que les échantillons se superposant.

Par exemple, lorsque *Np=Nmod*, un vecteur i d'échantillons fréquentiels comprend les échantillons

$N_{\frac{N-N\bmod}{2}+\frac{iN}{\Delta}+1}$ à $N_{\frac{N-N\bmod}{2}+\frac{(i+1)N}{\Delta}}$, avec 0=<*i*<$\Delta$. Il y a donc une superposition entre le vecteur *i* et le vecteur *i*+1, pour les échantillons $N_{\frac{N-N\bmod}{2}+\frac{(i+1)N}{\Delta}-\frac{N-Np}{2(\Delta-1)}}$ à $N_{\frac{N-N\bmod}{2}+\frac{(i+1)N}{\Delta}+\frac{N-Np}{2(\Delta-1)}}$.

Si l'on utilise une fonction de transfert « optimisée » (troisième et quatrième exemples), les vecteurs d'échantillons ne se chevauchent, puisqu'on répartit N échantillons fréquentiels dans $\Delta$ vecteurs d'échantillons fréquentiels de taille N/$\Delta$.

Ainsi, si $\Delta$ = 4, N = 64, et Np =52, le premier vecteur d'échantillons fréquentiels comprend les échantillons N1 à N16, le deuxième vecteur d'échantillons fréquentiels comprend les échantillons N17 à N32, le troisième vecteur d'échantillons fréquentiels comprend les échantillons N33 à N48, et le quatrième vecteur d'échantillons fréquentiels comprend les échantillons N49 à N64.

Finalement, si l'on souhaite diminuer encore la taille des informations à retransmettre à l'émetteur, il est possible de réduire le bruit affectant les CP/$\Delta$ ou 2CP/$\Delta$ premiers échantillons d'au moins une réponse partielle dans le domaine transformé, préalablement à l'étape de transmission du signal de retour à l'émetteur, en utilisant l'algorithme optionnel de réduction du bruit présenté dans les demandes de brevet français FR 1053696 déposée le 11 mai 2010 et FR 1058431 déposée le 15 octobre 2010.

*5.6 Performances*

La technique proposée selon l'invention présente de nombreux avantages.

Premièrement, elle offre un gain en termes de performances par rapport aux techniques de l'art antérieur, en remontant par feedback une information sur le canal de transmission de meilleure qualité. En effet, selon l'invention, on transmet par feedback des réponses partielles du canal dans le domaine transformé, obtenues à partir de plusieurs groupes de porteuses d'un symbole pilote (c'est à dire de plusieurs sous-bandes), et non une réponse globale obtenue à partir de l'ensemble des porteuses non nulles d'un symbole pilote.

Ainsi, si l'on considère des vecteurs d'échantillons fréquentiels comprenant chacun N/$\Delta$ échantillons fréquentiels successifs choisis parmi les Np échantillons fréquentiels obtenus par l'estimation de canal (correspondants aux positions de Np pilotes dédiés à l'estimation du canal), on retrouve dans le domaine transformé un canal dont l'énergie utile est concentrée sur les 2CP/$\Delta$ (ou CP/$\Delta$ dans le domaine temporel) premiers échantillons.

Cette technique permet donc de réduire la puissance du bruit, et offre un gain en performance par rapport aux techniques connues reposant sur la transmission par feedback d'une information sur le canal, et notamment par rapport aux techniques reposant sur la transmission par feedback d'une information sur le canal dans un domaine transformé, et non dans le domaine fréquentiel.

Ainsi, par rapport à la technique de transmission par feedback mettant en oeuvre une transformée en cosinus sur la réponse globale du canal en fréquence, on moyenne selon l'invention la puissance du bruit sur N échantillons dans le domaine transformé $\left( \Delta \times \dfrac{N}{\Delta} \right)$, et non sur Np échantillons dans le domaine transformé, et on remonte à l'émetteur au plus $\Delta$x2CP/$\Delta$ échantillons dans le domaine transformé. Le gain en terme de bruit est donc de 10log($N$/$Np$), quelque soit le type de fonction de transfert mis en oeuvre.

On note que ce gain dépend des paramètres du système de communication, et notamment du nombre de porteuses nulles. En effet, on rappelle que dans les systèmes de communication actuels il y a toujours des porteuses modulées par une valeur nulle (encore appelées porteuses non modulées) en bordure de spectre, permettant d'éviter les interférences avec les systèmes occupant les bandes voisines.

A titre d'exemple, ce gain est de 0,9dB dans le cas de la norme 802.11n (norme Wifi avec N = 64 et Np = Nmod = 52), et peut augmenter jusqu'à 2,31dB dans le cas d'un système de type 3GPP-LTE (norme réseau mobile avec N = 1024 et Np = Nmod = 600).

Deuxièmement, l'invention permet de réduire la complexité des techniques connues reposant sur la transmission par feedback d'une information sur le canal, et notamment des techniques reposant sur la transmission par feedback d'une information globale sur le canal dans un domaine transformé, et non dans le domaine fréquentiel.

Plus précisément, l'invention permet de réduire considérablement la complexité de détermination des informations sur le canal dans le domaine transformé, sans dégrader les performances, en considérant différentes valeurs de $\Delta$.

Ainsi, alors que la technique reposant sur la transmission par feedback d'une réponse globale sur le canal dans un domaine transformé (par DCT) nécessite l'utilisation de $Np^2$ opérations de multiplication et $Np(Np$-1) opérations d'addition, la technique selon l'invention reposant sur la transmission d'échantillons extraits de réponses partielles du canal dans le domaine transformé (par DCT) ne nécessite que l'utilisation de $(N/2\Delta)\log_2(N/\Delta)$ opérations de multiplication et $(3N/2\Delta)\log_2(N/\Delta)$- $N$ + 1 opérations d'addition.

A titre d'exemple, la transmission par feedback d'une réponse globale sur le canal dans un domaine transformé (par DCT) nécessite 360000 opérations de multiplication et 359400 opérations d'addition dans le cas du système 3GPP-LTE, alors que la transmission d'échantillons extraits de réponses partielles du canal dans le domaine transformé (par DCT) avec $\Delta$ = 8 selon l'invention permet de réduire de 78 fois le nombre d'opérations de multiplications et de 37 fois le nombre d'opérations d'additions.

Le tableau ci-après présente ainsi le nombre d'opérations de multiplication et d'addition nécessaires en fonction du nombre de vecteurs d'échantillons fréquentiels $\Delta$ issus de l'étape de répartition, dans le cas de la norme Wifi 802.11n ou 3GPP-LTE :

| $\Delta$ | Nombre d'opérations de multiplication (802.11n / 3GPP-LTE) | Nombre d'opérations d'addition (802.11n/3GPP-LTE) |
|---|---|---|
| 2 | 160/4608 | 414/12802 |
| 4 | 128/4096 | 316/11268 |
| 8 | 96 /4608 | 224 / 9736 |

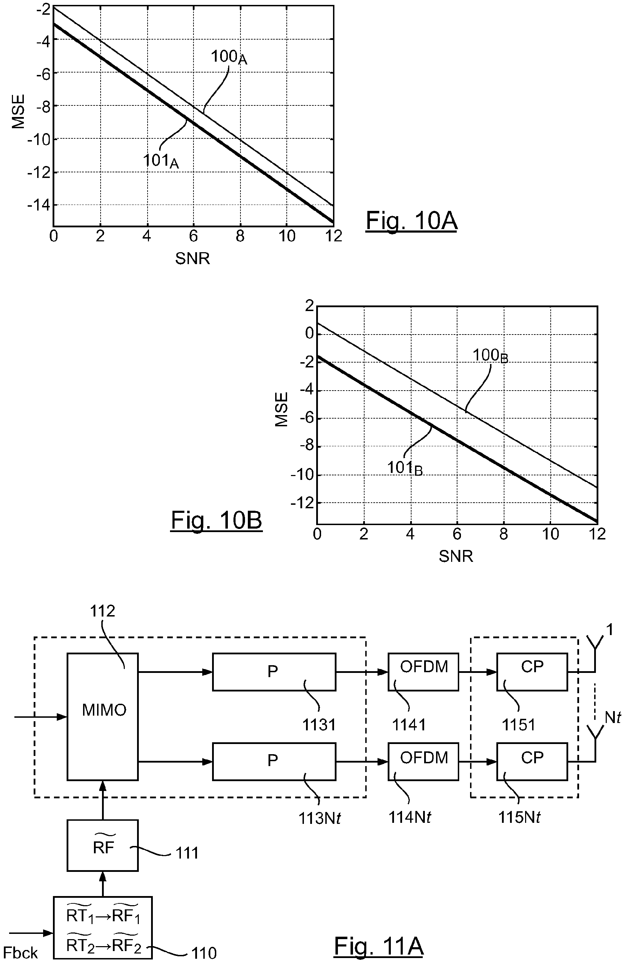

Les performances de l'invention sont finalement illustrées en figures 10A et 10B, qui représentent l'erreur quadratique moyenne (MSE) entre la réponse du canal regénérée au niveau de l'émetteur après réception du signal de retour et le canal réel, en fonction du rapport signal à bruit dans le cas de la norme 802.11n (figure 10A) et de la norme 3GPP-LTE (figure 10B).

Plus précisément, la courbe 100A (respectivement 100B) illustre l'erreur quadratique moyenne en fonction du rapport signal à bruit dans le cas d'une transmission par feedback d'une réponse globale du canal dans un domaine transformé (par DCT), et la courbe 101A (respectivement 101B) illustre l'erreur quadratique moyenne en fonction du rapport signal à bruit dans le cas d'une transmission par feedback de réponses partielles du canal dans un domaine transformé (par DCT), avec $\Delta$ = 2. Les courbes pour $\Delta$ = 4 ou $\Delta$ = 8 se superposent pratiquement à celles obtenues pour $\Delta$ = 2.

*5.7 Exemple de chaîne d'émission et de réception*

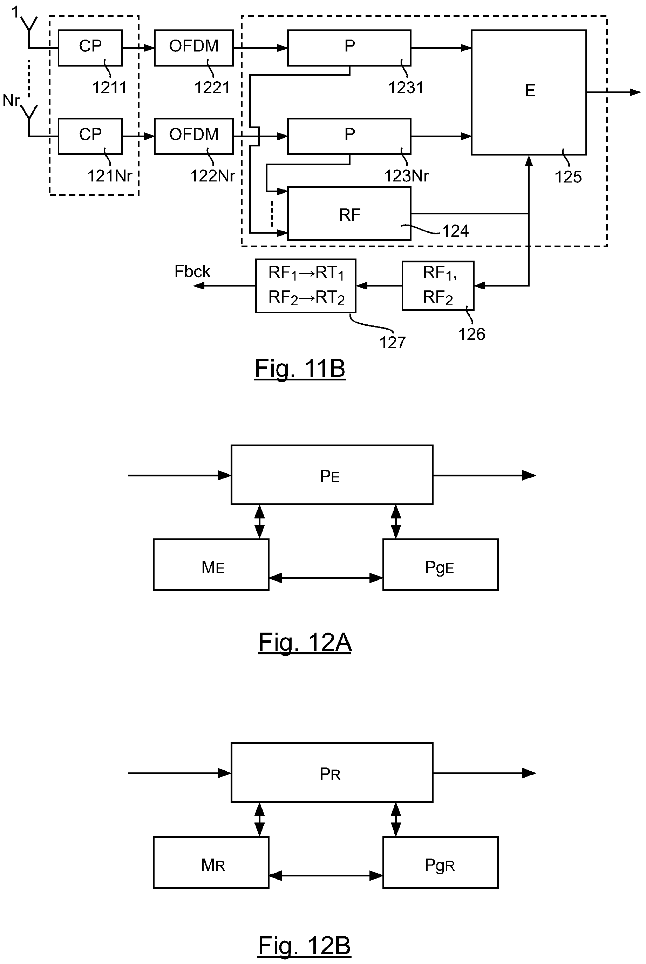

On présente désormais, en relation avec les figures 11A et 11B, un exemple de chaîne d'émission et de réception dans un système de transmission MIMO mettant en oeuvre Nt antennes d'émission et Nr antennes de réception et une modulation OFDM.

Côté émission, l'émetteur (par exemple un point d'accès AP) reçoit un signal de retour Fbck, transmis selon le procédé de réception décrit ci-dessus, portant au moins deux ensembles comprenant des échantillons représentatifs du canal dans le domaine transformé, associés chacun à une réponse partielle distincte.

Ces échantillons dans le domaine transformé sont alors transformés dans le domaine fréquentiel dans un module de transformation 110, délivrant des vecteurs d'échantillons fréquentiels $(\widetilde{RF1}, \widetilde{RF2})$. Cette opération permet de récupérer la réponse fréquentielle du canal sur les différents groupes de porteuses (différentes sous-bandes).

On recombine alors les vecteurs d'échantillons fréquentiels dans un module de recombinaison 111, ce qui permet de récupérer la réponse fréquentielle du canal sur l'ensemble des porteuses non nulle, et délivre une information globale sur le canal dans le domaine fréquentiel (estimation du canal). Le signal multiporteuse est alors mis en forme de façon classique, en tenant compte de l'estimation du canal (codage espace/temps MIMO 112, insertion de symboles pilotes P 1131 à 113Nt, modulation OFDM 1141 à 114Nt, insertion de l'intervalle de garde CP 1151 à 115Nt, émission sur les Nt antennes d'émission). On note que les opérations de codage espace/temps MIMO et d'insertion de symboles pilotes P sont mises en oeuvre dans le domaine fréquentiel, alors que les opérations d'insertion d'un intervalle de garde sont mises en oeuvre dans le domaine temporel.

Côté réception, le récepteur (par exemple une station) reçoit un signal multiporteuse sur les Nr antennes de réception, et met en oeuvre des opérations classiques de suppression de l'intervalle de garde CP 1211 à 121Nr, démodulation OFDM 1221 à 122Nr, extraction des pilotes P 1231 à 123Nr, estimation du canal 124 à l'aide des pilotes, délivrant une information sur le canal dans le domaine fréquentiel (réponse fréquentielle), égalisation et détection 125, délivrant une estimation des données émises. On note que les opérations de suppression de l'intervalle de garde sont mises en oeuvre dans le domaine temporel, et les opérations d'extraction des pilotes, estimation du canal, égalisation et détection, sont mises en oeuvre dans le domaine fréquentiel.

En plus de ces opérations, le récepteur répartit les échantillons fréquentiels de la réponse fréquentielle du canal (estimation du canal obtenue dans le domaine fréquentiel) dans au moins deux vecteurs d'échantillons fréquentiels, dans un module de répartition 126. Le récepteur transforme ensuite les vecteurs d'échantillons fréquentiels du domaine fréquentiel vers un domaine transformé, dans un module de transformation 127, délivrant, pour au moins un vecteur d'échantillons fréquentiels, une réponse partielle du canal dans le domaine transformé.

Une réponse partielle comprend des échantillons représentatifs du canal dans le domaine transformé, localisés dans un intervalle présentant une longueur inférieure ou égale à $CP/\Delta$ (dans le cas d'une fonction de transfert de type transformé de Fourier) ou inférieure ou égale à $2\ CP/\Delta$ (dans le cas d'une fonction de transfert de type transformé en cosinus), et des échantillons représentatifs d'un bruit dans le domaine transformé.

Les échantillons représentatifs du canal dans le domaine transformé extraits des réponses partielles sont ensuite codés et transmis sur la voie de retour (Fbck).

*5.8 Structure des émetteurs et récepteurs*

On présente finalement, en relation avec les figures 12A et 12B, la structure simplifiée d'un émetteur et d'un récepteur mettant respectivement en oeuvre une technique d'émission et une technique de réception selon un mode de réalisation particulier décrit ci-dessus.

Un tel émetteur comprend une mémoire ME comprenant une mémoire tampon, une unité de traitement PE, équipée par exemple d'un microprocesseur, et pilotée par le programme d'ordinateur PgE, mettant en oeuvre le procédé d'émission selon l'invention.

A l'initialisation, les instructions de code du programme d'ordinateur PgE sont par exemple chargées dans une mémoire RAM avant d'être exécutées par le processeur de l'unité de traitement PE. L'unité de traitement PE reçoit en entrée des données à émettre et un signal de retour Fbck. Le microprocesseur de l'unité de traitement PE met en oeuvre les étapes du procédé d'émission décrit précédemment, selon les instructions du programme d'ordinateur PgE, pour mettre en forme le signal multiporteuse. Pour cela, l'émetteur comprend, outre la mémoire ME, des moyens de réception du signal de retour transmis par un récepteur, délivrant au moins deux ensembles comprenant des échantillons représentatifs du canal dans le domaine transformé, des moyens de transformation des ensembles vers le domaine fréquentiel, délivrant des vecteurs d'échantillons fréquentiels, et des moyens de recombinaison des vecteurs d'échantillons fréquentiels.

Ces moyens sont pilotés par le microprocesseur de l'unité de traitement PE.

Un tel récepteur comprend une mémoire MR comprenant une mémoire tampon, une unité de traitement PR, équipée par exemple d'un microprocesseur, et pilotée par le programme d'ordinateur PgR, mettant en oeuvre le procédé de réception selon l'invention.

A l'initialisation, les instructions de code du programme d'ordinateur PgR sont par exemple chargées dans une mémoire RAM avant d'être exécutées par le processeur de l'unité de traitement PR. L'unité de traitement PR reçoit en entrée le signal multiporteuse. Le microprocesseur de l'unité de traitement PR met en oeuvre les étapes du procédé de réception décrit précédemment, selon les instructions du programme d'ordinateur PgR, pour estimer les données émises et générer un signal de retour Fbck. Pour cela, le récepteur comprend, outre la mémoire MR, des moyens d'estimation du canal de transmission, des moyens de répartition des échantillons fréquentiels du canal dans au moins deux vecteurs d'échantillons fréquentiels, des moyens de transformation des vecteurs d'échantillons fréquentiels du domaine fréquentiel vers un domaine transformé, des moyens de transmission, d'un signal de retour portant au moins des échantillons représentatifs du canal dans ledit domaine transformé, extraits des réponses partielles.

Ces moyens sont pilotés par le microprocesseur de l'unité de traitement PR.

La mémoire MR permet également de stocker les valeurs propres obtenues lors des étapes de décomposition des matrices en valeurs propres, dans le cas où l'on utilise des fonctions de transfert optimisées.

**Revendications**

1. Procédé de réception d'un signal correspondant à un signal multiporteuse émis par un émetteur via au moins un canal de transmission,
   ledit procédé de réception comprenant une étape d'estimation (11) dudit au moins un canal, délivrant une information globale sur ledit au moins un canal dans le domaine fréquentiel, dite réponse fréquentielle, comprenant des échantillons fréquentiels,
   **caractérisé en ce qu'**il comprend également, pour ledit au moins un canal :

   - une étape de découpage en blocs (12) de la réponse fréquentielle dudit canal, délivrant au moins deux vecteurs d'échantillons fréquentiels, un échantillon fréquentiel pouvant appartenir à plusieurs vecteurs d'échantillons fréquentiels ;
   - une étape de transformation (13) desdits vecteurs d'échantillons fréquentiels du domaine fréquentiel vers un domaine transformé, délivrant, pour au moins un vecteur d'échantillons fréquentiels, une réponse partielle dudit canal dans ledit domaine transformé ;
   - une étape de transmission (14), audit émetteur, d'un signal de retour portant au moins des échantillons représentatifs dudit canal dans ledit domaine transformé extraits desdites réponses partielles.

2. Procédé de réception selon la revendication 1, **caractérisé en ce que** ladite réponse fréquentielle comprend N échantillons fréquentiels, avec N le nombre de porteuses d'un symbole pilote dudit signal multiporteuse, et **en ce que** ladite étape de répartition (12) répartit dans lesdits vecteurs d'échantillons fréquentiels uniquement les Np échantillons fréquentiels correspondant aux positions des porteuses dudit symbole pilote modulées par des pilotes dédiés à l'estimation dudit canal, avec Np inférieur à N.

3. Procédé de réception selon la revendication 1, **caractérisé en ce que** chaque vecteur d'échantillons fréquentiels comprend $\dfrac{N/\delta}{\Delta}$ échantillons fréquentiels, avec N le nombre de porteuses d'un symbole pilote dudit signal multiporteuse, $\delta$ le rapport entre le nombre Nmod de porteuses modulées par une valeur non nulle et le nombre Np de porteuses modulées par des pilotes dédiés à l'estimation dudit canal dudit symbole pilote, et $\Delta$ le nombre de vecteurs d'échantillons fréquentiels.

4. Procédé de réception selon la revendication 1, **caractérisé en ce que** ladite étape de transformation (13) met en oeuvre une transformée de Fourier inverse délivrant pour chaque vecteur d'échantillons fréquentiels une réponse partielle dudit canal dans le domaine temporel.

5. Procédé de réception selon la revendication 1, **caractérisé en ce que** ladite étape de transformation (13) met en oeuvre une transformée en cosinus délivrant pour chaque vecteur d'échantillons fréquentiels une réponse partielle dudit canal dans le domaine transformé.

6. Procédé de réception selon la revendication 1, **caractérisé en ce que** ladite réponse fréquentielle comprend N échantillons fréquentiels, avec N le nombre de porteuses d'un symbole pilote dudit signal multiporteuse, et **en ce que** ladite étape de répartition répartit lesdits N échantillons fréquentiels dans $\Delta$ vecteurs d'échantillons fréquentiels de taille N/$\Delta$.

**7.** Procédé de réception selon la revendication 6, **caractérisé en ce qu'**il comprend une étape de traitement desdits vecteurs d'échantillons fréquentiels, associant à chaque vecteur d'échantillons fréquentiels un vecteur modifié comprenant uniquement les échantillons fréquentiels correspondant aux positions des porteuses modulées par des pilotes dédiés à l'estimation dudit canal dudit symbole pilote, et **en ce que** ladite étape de transformation (13) met en oeuvre une matrice de transfert pour chaque vecteur modifié, construite en tenant compte des positions des porteuses modulées par des pilotes dédiés à l'estimation dudit canal.

**8.** Procédé de réception selon la revendication 1, **caractérisé en ce que** le nombre de vecteurs d'échantillons fréquentiels est une puissance de 2.

**9.** Récepteur d'un signal correspondant à un signal multiporteuse émis par un émetteur via au moins un canal de transmission,
ledit récepteur comprenant des moyens d'estimation (11) dudit au moins un canal, délivrant une information globale sur ledit au moins un canal dans le domaine fréquentiel, dite réponse fréquentielle, comprenant des échantillons fréquentiels,
**caractérisé en ce qu'**il comprend également :

- des moyens de découpage en blocs (12) de la réponse fréquentielle dudit canal, délivrant au moins deux vecteurs d'échantillons fréquentiels, un échantillon fréquentiel pouvant appartenir à plusieurs vecteurs d'échantillons fréquentiels ;
- des moyens de transformation (13) desdits vecteurs d'échantillons fréquentiels du domaine fréquentiel vers un domaine transformé, délivrant, pour au moins un vecteur d'échantillons fréquentiels, une réponse partielle dudit canal dans ledit domaine transformé ;
- des moyens de transmission (14), audit émetteur, d'un signal de retour portant au moins des échantillons représentatifs dudit canal dans ledit domaine transformé extraits desdites réponses partielles.

**10.** Procédé d'émission d'un signal multiporteuse via au moins un canal de transmission, **caractérisé en ce qu'**il comprend les étapes suivantes :

- réception (21) d'un signal de retour transmis selon le procédé de réception de la revendication 1, délivrant au moins deux ensembles comprenant des échantillons représentatifs dudit canal dans le domaine transformé, associés chacun à une réponse partielle distincte ;
- transformation (22) desdits ensembles vers le domaine fréquentiel, délivrant des vecteurs d'échantillons fréquentiels ;

recombinaison (23) desdits vecteurs d'échantillons fréquentiels, délivrant une information globale sur ledit canal dans le domaine fréquentiel.

**11.** Procédé d'émission selon la revendication 10, **caractérisé en ce que** ladite étape de transformation (22) met en oeuvre les étapes suivantes, pour au moins un desdits ensembles :

- construction d'un vecteur d'échantillons dans le domaine transformé de taille $N/\Delta$, comprenant ledit ensemble et des éléments nuls, avec $N$ le nombre de porteuses d'un symbole pilote et $\Delta$ le nombre de vecteurs d'échantillons fréquentiels ;
- multiplication dudit vecteur d'échantillons dans le domaine transformé par une matrice de transfert de taille $N/\Delta \times N/\Delta$, délivrant un vecteur d'échantillons fréquentiels de taille $N/\Delta$.

**12.** Procédé d'émission selon la revendication 10, **caractérisé en ce que** ladite étape de transformation (22) met en oeuvre, pour au moins un desdits ensembles, une étape de multiplication dudit ensemble par une matrice de transfert de taille $CP/\Delta \times N/\Delta$, extraite d'une matrice représentative d'une transformée de taille $N/\Delta \times N/\Delta$, délivrant un vecteur d'échantillons fréquentiels de taille $N/\Delta$, avec $N$ le nombre de porteuses d'un symbole pilote, $\Delta$ le nombre de vecteurs d'échantillons fréquentiels et $CP$ le nombre d'échantillons de l'intervalle de garde du signal multiporteuse.

**13.** Emetteur d'un signal multiporteuse via au moins un canal de transmission,
**caractérisé en ce qu'**il comprend :

- des moyens de réception (21) d'un signal de retour transmis par un récepteur selon la revendication 9, délivrant au moins deux ensembles comprenant des échantillons représentatifs dudit canal dans le domaine transformé, associés chacun à une réponse partielle distincte ;
- des moyens de transformation (22) desdits ensembles vers le domaine fréquentiel, délivrant des vecteurs d'échantillons fréquentiels ;
- des moyens de recombinaison (23) desdits vecteurs d'échantillons fréquentiels, délivrant une information globale sur ledit canal dans le domaine fréquentiel.

14. Programme d'ordinateur comportant des instructions pour la mise en oeuvre d'un procédé selon la revendication 1 ou selon la revendication 10 lorsque ce programme est exécuté par un processeur.

**Patentansprüche**

1. Verfahren zum Empfangen eines Signals, das einem Mehrträgersignal entspricht, das von einem Sender über mindestens einen Übertragungskanal gesendet wird,
wobei das Verfahren zum Empfangen einen Schritt zum Schätzen (11) des mindestens einen Kanals aufweist, der eine umfassende Information über den mindestens einen Kanal in der Frequenzdomäne, die sogenannte Frequenzantwort, liefert, die Abtastfrequenzen aufweist,
**dadurch gekennzeichnet, dass** es ebenfalls für den mindestens einen Kanal Folgendes aufweist:

- einen Schritt des Zerlegens der Frequenzantwort des Kanals in Blöcke (12), der mindestens zwei Vektoren von Abtastfrequenzen liefert, wobei eine Abtastfrequenz zu mehreren Vektoren von Abtastfrequenzen gehören kann;
- einen Schritt des Transformierens (13) der Vektoren von Abtastfrequenzen von der Frequenzdomäne in eine transformierte Domäne, der für mindestens einen Vektor von Abtastfrequenzen eine Teilantwort des Kanals in der transformierten Domäne liefert;
- einen Schritt des Übertragens (14) eines Rücksignals an den Sender, das mindestens repräsentative Abtastungen des Kanals in der transformierten Domäne trägt, die aus den Teilantworten extrahiert werden.

2. Verfahren zum Empfangen nach Anspruch 1, **dadurch gekennzeichnet, dass** die Frequenzantwort N Abtastfrequenzen aufweist, wobei N die Anzahl der Träger eines Pilotsymbols des Mehrträgersignals ist, und dass der Schritt des Zerlegens (12) nur die Np Abtastfrequenzen in die Vektoren von Abtastfrequenzen zerlegt, die den Positionen der Träger des Pilotsymbols entsprechen, die durch Pilotsymbole, die der Schätzung des Kanals gewidmet sind, moduliert sind, wobei Np kleiner als N ist.

3. Verfahren zum Empfangen nach Anspruch 1, **dadurch gekennzeichnet, dass** jeder Vektor von Abtastfrequenzen $\frac{N/\delta}{\Delta}$ Abtastfrequenzen aufweist, wobei N die Anzahl der Träger eines Pilotsymbols des Mehrträgersignals, $\delta$ das Verhältnis zwischen der Anzahl Nmod von Trägern, die durch einen Wert, der nicht gleich Null ist, moduliert sind, und der Anzahl Np von Trägern, die durch Pilotsymbole, die der Schätzung des Kanals des Pilotsymbols gewidmet sind, moduliert sind, und $\Delta$ die Anzahl der Vektoren von Abtastfrequenzen ist.

4. Verfahren zum Empfangen nach Anspruch 1, **dadurch gekennzeichnet, dass** der Schritt des Transformierens (13) eine inverse FourierTransformation umsetzt, die für jeden Vektor von Abtastfrequenzen eine Teilantwort des Kanals in der Zeitdomäne liefert.

5. Verfahren zum Empfangen nach Anspruch 1, **dadurch gekennzeichnet, dass** der Schritt des Transformierens (13) eine Kosinustransformation umsetzt, die für jeden Vektor von Abtastfrequenzen eine Teilantwort des Kanals in der transformierten Domäne liefert.

6. Verfahren zum Empfangen nach Anspruch 1, **dadurch gekennzeichnet, dass** die Frequenzantwort N Abtastfrequenzen aufweist, wobei N die Anzahl der Träger eines Pilotsymbols des Mehrträgersignals ist, und dass der Schritt des Zerlegens die N Abtastfrequenzen in $\Delta$ Vektoren von Abtastfrequenzen von der Größe N/$\Delta$ zerlegt.

7. Verfahren zum Empfangen nach Anspruch 6, **dadurch gekennzeichnet, dass** es einen Schritt des Bearbeitens der Vektoren von Abtastfrequenzen aufweist, der jedem Vektor von Abtastfrequenzen einen modifizierten Vektor zuordnet, der nur die Abtastfrequenzen aufweist, die den Positionen der Träger entsprechen, die durch Pilotsymbole, die der Schätzung des Kanals des Pilotsymbols gewidmet sind, moduliert sind, und dass der Schritt des Transformierens (13) eine Übertragungsmatrix für jeden modifizierten Vektor umsetzt, die unter Berücksichtigung der Positionen der Träger erstellt wird, die durch Pilotsymbole, die der Schätzung des Kanals gewidmet sind, moduliert sind.

8. Verfahren zum Empfangen nach Anspruch 1, **dadurch gekennzeichnet, dass** die Anzahl der Vektoren von Abtastfrequenzen eine Potenz von 2 ist.

9. Empfänger eines Signals, das einem Mehrträgersignal entspricht, das von einem Sender über mindestens einen Übertragungskanal gesendet wird,
wobei der Empfänger Mittel zum Schätzen (11) des mindestens einen Kanals aufweist, die eine umfassende Information über den mindestens einen Kanal in der Frequenzdomäne, die sogenannte Frequenzantwort, liefern, die Abtastfrequenzen aufweist,
**dadurch gekennzeichnet, dass** er ebenfalls Folgendes aufweist:

- Mittel zum Zerlegen der Frequenzantwort des Kanals in Blöcke (12), die mindestens zwei Vektoren von Abtastfrequenzen liefern, wobei eine Abtastfrequenz zu mehreren Vektoren von Abtastfrequenzen gehören kann;
- Mittel zum Transformieren (13) der Vektoren von Abtastfrequenzen von der Frequenzdomäne in eine transformierte Domäne, die für mindestens einen Vektor von Abtastfrequenzen eine Teilantwort des Kanals in der transformierten Domäne liefern;
- Mittel zum Übertragen (14) eines Rücksignals an den Sender, das mindestens repräsentative Abtastungen des Kanals in der transformierten Domäne trägt, die aus den Teilantworten extrahiert sind.

10. Verfahren zum Senden eines Mehrträgersignals über mindestens einen Übertragungskanal,
**dadurch gekennzeichnet, dass** es die folgenden Schritte aufweist:

- Empfangen (21) eines Rücksignals, das nach dem Verfahren zum Empfangen von Anspruch 1 an den Sender gesendet wird, das mindestens zwei Sätze liefert, die repräsentative Abtastungen des Kanals in der transformierten Domäne aufweisen, die jeweils einer gesonderten Teilantwort zugeordnet sind;
- Transformieren (22) der Sätze in die Frequenzdomäne, wodurch Vektoren von Abtastfrequenzen geliefert werden;
- Rekombinieren (23) der Vektoren von Abtastfrequenzen, wodurch eine umfassende Information über den Kanal in der Frequenzdomäne geliefert wird.

11. Verfahren zum Senden nach Anspruch 10, **dadurch gekennzeichnet, dass** der Schritt des Transformierens (22) für mindestens einen der Sätze die folgenden Schritte umsetzt:

- Konstruieren eines Abtastvektors in der transformierten Domäne von der Größe $N/\Delta$, umfassend den Satz und Nullelemente, wobei N die Anzahl der Träger eines Pilotsymbols und $\Delta$ die Anzahl von Vektoren von Abtastfrequenzen ist;
- Multiplizieren des Abtastvektors in der transformierten Domäne mit einer Übertragungsmatrix von der Größe $N/\Delta$ x $N/\Delta$, wodurch ein Vektor von Abtastfrequenzen von der Größe $N/\Delta$ geliefert wird.

12. Verfahren zum Senden nach Anspruch 10, **dadurch gekennzeichnet, dass** der Schritt des Transformierens (22) für mindestens einen der Sätze einen Schritt des Multiplizierens des Satzes mit einer Übertragungsmatrix von der Größe $CP/\Delta$ x $N/\Delta$ umsetzt, die aus einer repräsentativen Matrix einer Transformation von der Größe $N/\Delta$ x $N/\Delta$ extrahiert wird, der einen Vektor von Abtastfrequenzen von der Größe $N/\Delta$ liefert, wobei N die Anzahl der Träger eines Pilotsymbols, $\Delta$ die Anzahl von Vektoren von Abtastfrequenzen und CP die Anzahl von Abtastungen des Schutzintervalls des Mehrträgersignals ist.

13. Sender eines Mehrträgersignals über mindestens einen Übertragungskanal,
**dadurch gekennzeichnet, dass** er Folgendes aufweist:

- Mittel zum Empfangen (21) eines Rücksignals, das durch einen Empfänger nach Anspruch 9 gesendet wird, die mindestens zwei Sätze liefern, die repräsentative Abtastungen des Kanals in der transformierten Domäne aufweisen, die jeweils einer gesonderten Teilantwort zugeordnet sind;
- Mittel zum Transformieren (22) der Sätze in eine transformierte Domäne, die Vektoren von Abtastfrequenzen liefern;
- Mittel zum Rekombinieren (23) der Vektoren von Abtastfrequenzen, die eine umfassende Information über den Kanal in der Frequenzdomäne liefern.

**14.** Computerprogramm, das Anleitungen zum Umsetzen eines Verfahrens nach Anspruch 1 oder 10 aufweist, wenn dieses Programm von einem Prozessor ausgeführt wird.

**Claims**

**1.** Method for receiving a signal corresponding to a multicarrier signal sent by a sender via at least one transmission channel,
said receiving method comprising a step (11) for estimating said at least one channel, delivering a piece of overall information on said at least one channel in the frequency domain, termed frequency response, comprising frequency samples,
**characterized in that** it also comprises, for said at least one channel:

- a step (12) for cutting the frequency response of said channel into blocks, delivering at least two frequency sample vectors, a frequency sample being able to belong to multiple frequency sample vectors;
- a step (13) for transforming said frequency sample vectors from the frequency domain to a transformed domain, delivering, for at least one frequency sample vector, a partial response from said channel in said transformed domain;
- a step (14) for transmitting, to said sender, a return signal carrying at least samples representative of said channel in said transformed domain that are extracted from said partial responses.

**2.** Receiving method according to Claim 1, **characterized in that** said frequency response comprises N frequency samples, where N is the number of carriers of a pilot symbol of said multicarrier signal, and **in that** said division step (12) divides, into said frequency sample vectors, solely the Np frequency samples corresponding to the positions of the carriers of said pilot symbol that are modulated by pilots dedicated to the estimation of said channel, where Np is smaller than N.

**3.** Receiving method according to Claim 1, **characterized in that** each frequency sample vector comprises $\frac{N/\delta}{\Delta}$ frequency samples, where N is the number of carriers of a pilot symbol of said multicarrier signal, $\delta$ is the ratio of the number Nmod of carriers modulated by a non-zero value to the number Np of carriers modulated by pilots dedicated to the estimation of said channel of said pilot symbol, and $\Delta$ is the number of frequency sample vectors.

**4.** Receiving method according to Claim 1, **characterized in that** said transformation step (13) implements an inverse Fourier transform delivering, for each frequency sample vector, a partial response from said channel in the time domain.

**5.** Receiving method according to Claim 1, **characterized in that** said transformation step (13) implements a cosine transform delivering, for each frequency sample vector, a partial response from said channel in the transformed domain.

**6.** Receiving method according to Claim 1, **characterized in that** said frequency response comprises N frequency samples, where N is the number of carriers of a pilot symbol of said multicarrier signal, and **in that** said division step divides said N frequency samples into $\Delta$ frequency sample vectors of size N/$\Delta$.

**7.** Receiving method according to Claim 6, **characterized in that** it comprises a step for processing said frequency sample vectors, associating, with each frequency sample vector, a modified vector solely comprising the frequency samples corresponding to the positions of the carriers modulated by pilots dedicated to the estimation of said channel of said pilot symbol, and **in that** said transformation step (13) implements a transfer matrix for each modified vector, which transfer matrix is constructed while taking into account the positions of the carriers modulated by pilots dedicated to the estimation of said channel.

**8.** Receiving method according to Claim 1, **characterized in that** the number of frequency sample vectors is a power of two.

**9.** Receiver of a signal corresponding to a multicarrier signal sent by a sender via at least one transmission channel,

said receiver comprising means (11) for estimating said at least one channel, delivering a piece of overall information on said at least one channel in the frequency domain, termed frequency response, comprising frequency samples, **characterized in that** it also comprises:

- means (12) for cutting the frequency response of said channel into blocks, delivering at least two frequency sample vectors, a frequency sample being able to belong to multiple frequency sample vectors;
- means (13) for transforming said frequency sample vectors from the frequency domain to a transformed domain, delivering, for at least one frequency sample vector, a partial response from said channel in said transformed domain;
- means for transmitting (14), to said sender, a return signal carrying at least samples representative of said channel in said transformed domain that are extracted from said partial responses.

10. Method for sending a multicarrier signal via at least one transmission channel, **characterized in that** it comprises the following steps:

- receiving (21) a return signal transmitted according to the receiving method of Claim 1, delivering at least two sets comprising samples representative of said channel in the transformed domain, each associated with a separate partial response;
- transforming (22) said sets to the frequency domain, delivering frequency sample vectors;
- recombining (23) said frequency sample vectors, delivering a piece of overall information on said channel in the frequency domain.

11. Sending method according to Claim 10, **characterized in that** said transformation step (22) implements the following steps, for at least one of said sets:

- constructing a sample vector in the transformed domain of size $N/\Delta$, comprising said set and zero elements, where N is the number of carriers of a pilot symbol and $\Delta$ is the number of frequency sample vectors;
- multiplying said sample vector in the transformed domain by a transfer matrix of size $N/\Delta$ x $N/\Delta$, delivering a frequency sample vector of size $N/\Delta$.

12. Sending method according to Claim 10, **characterized in that** said transformation step (22) implements, for at least one of said sets, a step for multiplying said set by a transfer matrix of size $CP/\Delta$ x $N/\Delta$, extracted from a matrix representative of a transform of size $N/\Delta$ x $N/\Delta$, delivering a frequency sample vector of size $N/\Delta$, where N is the number of carriers of a pilot symbol, $\Delta$ is the number of frequency sample vectors and CP is the number of samples of the guard interval of the multicarrier signal.

13. Sender of a multicarrier signal via at least one transmission channel, **characterized in that** it comprises:

- means for receiving (21) a return signal transmitted by a receiver according to Claim 9, delivering at least two sets comprising samples representative of said channel in the transformed domain, each associated with a separate partial response;
- means for transforming (22) said sets to the frequency domain, delivering frequency sample vectors;
- means for recombining (23) said frequency sample vectors, delivering a piece of overall information on said channel in the frequency domain.

14. Computer program comprising instructions for implementing a method according to Claim 1 or according to Claim 10 when this program is executed by a processor.

Fig. 1

Fig. 2

Fig. 3A

Fig. 3B

Fig. 4

Fig. 5A

Fig. 5B

Fig. 6

Fig. 7

Fig. 8

Fig. 9

Fig. 10A

Fig. 10B

Fig. 11A

Fig. 11B

Fig. 12A

Fig. 12B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1053696
- FR 1058431

- WO 2006060241 A